# EUROPEAN PATENT SPECIFICATION

(11) **EP 4 670 052 B1**
(45) Date of publication and mention of the grant of the patent: **11.11.2026**
(21) Application number: 24700162.1
(22) Date of filing: 04.01.2024
(51) Int. Cl.: G06F 12/14

(54) **PREDETERMINED LESS-SECURE MEMORY PROPERTY**
VORBESTIMMTE WENIGER SICHERE SPEICHEREIGENSCHAFT
PROPRIÉTÉ DE MÉMOIRE MOINS SÉCURISÉE PRÉDÉTERMINÉE

(30) Priority: 24.02.2023 GB 202302655
(43) Date of publication of application: 31.12.2025
(73) Proprietor: ARM Limited, Cambridgeshire CB1 9NJ (GB)
(72) Inventor: PARKER, Jason, Sheffield S1 4LW (GB); ELAD, Yuval, Cambridge, Cambridgeshire CB1 9NJ (GB); GARCIA-TOBIN, Carlos, Cambridge, Cambridgeshire CB1 9NJ (GB); CHADWICK, Alexander Donald Charles, Cambridge, Cambridgeshire CB1 9NJ (GB)
(74) Representative: D Young & Co LLP
(86) International application number: PCT/GB2024/050010
(87) International publication number: WO 2024/175867

(56) References cited:
- GB-A- 2 593 486
- GB-A- 2 594 062
- US-A1- 2022 318 140

## Description

The present technique relates to the field of data processing.

A data processing system may have address translation circuitry to translate a virtual address of memory access request to a physical address corresponding to a location to be accessed in a memory system.

US 2022/318140A1 describes processing circuitry which processes instructions in one of at least three domains each associated with a corresponding physical address space, and issues a memory access request to a memory system, the memory access request comprising a partition identifier and a multi-bit partition identifier space indicator indicating a selected partition identifier space. The selected partition identifier space and partition identifier together represent information for selecting, at a memory system component, parameters for controlling allocation of resources for handling the memory access request or managing contention for said resources, or for selecting whether performance monitoring data is updated in response to the memory access request.

At least some examples provide an apparatus comprising: address translation circuitry to translate a target virtual address of a memory access request to a target physical address, the memory access request being associated with one of a plurality of domains of processing, the plurality of domains including at least a less secure domain associated with a less secure physical address space and a more secure domain associated with a more secure physical address space; physical address space selection circuitry to select a selected physical address space for the memory access request from among a plurality of physical address spaces including at least the less secure physical address space and the more secure physical address space, the more secure physical address space being prohibited from being selected for memory access requests associated with the less secure domain; and checking circuitry to determine whether to reject the memory access request based on protection information corresponding to the target physical address, the protection information specifying which of the plurality of physical address spaces is allowed to provide access to the target physical address; in which: in at least one mode of operation, in response to determining that the protection information corresponding to the target physical address indicates a predetermined less-secure memory property, the checking circuitry is configured to determine that: the less secure physical address space is allowed to provide access to the target physical address, the more secure physical address space is prohibited from providing access to the target physical address, and memory access requests associated with the more secure domain are prohibited from accessing the target physical address, even when the selected physical address space is the less secure physical address space.

At least some examples provide a method comprising: translating a target virtual address of a memory access request to a target physical address, the memory access request being associated with one of a plurality of domains of processing, the plurality of domains including at least a less secure domain associated with a less secure physical address space and a more secure domain associated with a more secure physical address space; selecting a selected physical address space for the memory access request from among a plurality of physical address spaces including at least the less secure physical address space and the more secure physical address space, the more secure physical address space being prohibited from being selected for memory access requests associated with the less secure domain; and determining whether to reject the memory access request based on protection information corresponding to the target physical address, the protection information specifying which of the plurality of physical address spaces is allowed to provide access to the target physical address; in which: in at least one mode of operation, in response to determining that the protection information corresponding to the target physical address indicates a predetermined less-secure memory property, a determination is made that: the less secure physical address space is allowed to provide access to the target physical address, the more secure physical address space is prohibited from providing access to the target physical address, and memory access requests associated with the more secure domain are prohibited from accessing the target physical address, even when the selected physical address space is the less secure physical address space.

At least some examples provide a computer-readable medium to store computer-readable code for fabrication of the apparatus as described above.

At least some examples provide a computer program comprising instructions which, when executed by a host data processing apparatus, control the host data processing apparatus to provide an instruction execution environment for executing target program code, the computer program comprising: address translation program logic to translate a target virtual address of a memory access request to a target simulated physical address, the memory access request being associated with one of a plurality of domains of processing, the plurality of domains including at least a less secure domain associated with a less secure simulated physical address space and a more secure domain associated with a more secure simulated physical address space; physical address space selection program logic to select a selected simulated physical address space for the memory access request from among a plurality of simulated physical address spaces including at least the less secure simulated physical address space and the more secure simulated physical address space, the more secure simulated physical address space being prohibited from being selected for memory access requests associated with the less secure domain; and checking program logic to determine whether to reject the memory access request based on protection information corresponding to the target simulated physical address, the protection information specifying which of the plurality of simulated physical address spaces is allowed to provide access to the target simulated physical address; in which: in at least one mode of operation, in response to determining that the protection information corresponding to the target simulated physical address indicates a predetermined less-secure memory property, the checking program logic is configured to determine that: the less secure simulated physical address space is allowed to provide access to the target simulated physical address, the more secure simulated physical address space is prohibited from providing access to the target simulated physical address, and memory access requests associated with the more secure domain are prohibited from accessing the target simulated physical address, even when the selected simulated physical address space is the less secure simulated physical address space.

A storage medium may store the computer program mentioned above. The storage medium may be a non-transitory storage medium.

Further aspects, features and advantages of the present technique will be apparent from the following description of examples, which is to be read in conjunction with the accompanying drawings, in which:
Figure 1 illustrates an example of a data processing apparatus;
Figure 2 illustrates a number of domains in which processing circuitry can operate;
Figure 3 illustrates an example of a processing system supporting granule protection lookups;
Figure 4 schematically illustrates aliasing of a number of physical address spaces onto a system physical address space identifying locations in the memory system;
Figure 5 illustrates an example of partitioning the effective hardware physical address space so that different architectural physical address spaces have access to respective portions of the system physical address space;
Figure 6 is a flow diagram illustrating a method of determining the current domain of operation of the processing circuitry;
Figure 7 shows examples of page table entry formats for page table entries used for translating virtual addresses to physical addresses;
Figure 8 is a flow diagram showing a method of selecting a physical address space to be accessed by a given memory access request;
Figure 9 illustrates a number of stages of address translation and granule protection information filtering;
Figure 10 illustrates a method of performing a granule protection check based on granule protection information;
Figure 11 illustrates steps performed for the granule protection check when the granule protection information corresponding to the target address of a memory access request has an encoding indicating a predetermined less-secure memory property;
Figure 12 illustrates an example of a data processing system having a system memory management unit; and
Figure 13 illustrates a simulation example.

Data processing systems may support use of virtual memory, where address translation circuitry is provided to translate a virtual address specified by a memory access request into a physical address associated with a location in a memory system to be accessed. The mappings between virtual addresses and physical addresses may be defined in one or more page table structures. The page table entries within the page table structures could also define some access permission information which may control whether a given software process executing on the processing circuitry is allowed to access a particular virtual address.

In some processing systems, virtual addresses may be mapped by the address translation circuitry onto a single physical address space which is used by the memory system to identify locations in memory to be accessed. In such a system, control over whether a particular software process can access a particular address may be provided solely based on the page table structures used to provide the virtual-to-physical address translation mappings. However, such page table structures may typically be defined by an operating system and/or a hypervisor. If the operating system or the hypervisor is compromised then this may cause a security leak where sensitive information may become accessible to an attacker.

Therefore, for some systems where there is a need for certain processes to execute securely in isolation from other processes, the system may support operation in a number of domains, and a number of distinct physical address spaces may be supported. The domains include at least a less secure domain and a more secure domain (corresponding to a less secure physical address space and more secure physical address space respectively), and the more secure physical address space may be prohibited from being selected for memory access requests associated with the less secure domain. By isolating accesses into distinct physical address spaces, this can provide a stronger security guarantee which does not rely on the page table permission information set by an operating system or hypervisor.

In a system in which a virtual address of a memory access request can be mapped to a physical address in one of two or more distinct physical address spaces, protection information can be used to limit which physical addresses are accessible within a particular physical address space. This can be useful for ensuring that certain physical memory locations implemented in hardware either on-chip or off-chip can be restricted for access within a particular physical address space or a particular subset of physical address spaces if desired.

Hence, an apparatus may comprise address translation circuitry, physical address space (PAS) selection circuitry, and checking circuitry. The address translation circuitry translates a target virtual address (VA) of a memory access request to a target physical address (PA). The memory access request is associated with one of two or more domains of processing and the domains include at least a less secure domain associated with a less secure PAS and a more secure domain associated with a more secure PAS. The PAS selection circuitry selects a selected PAS for the memory access request from among two or more PASs including at least the less secure PAS and the more secure PAS, the more secure PAS being prohibited from being selected for memory access requests associated with the less secure domain. The checking circuitry determines whether to reject the memory access request based on protection information corresponding to the target PA. The protection information specifies which of the PASs is allowed to provide access to the target physical address.

In the examples discussed below, in at least one mode of operation, in response to determining that the protection information corresponding to the target PA indicates a predetermined less-secure memory property, the checking circuitry determine that: (i) the less secure PAS is allowed to provide access to the target physical address; (ii) the more secure PAS is prohibited from providing access to the target physical address, and (iii) memory access requests associated with the more secure domain are prohibited from accessing the target PA, even when the selected physical address space is the less secure physical address space.

This approach is unusual since typically, other than that the domain associated with the memory access request may be a factor in selecting the selected PAS for a memory access request, the check based on the protection information corresponding to the target PA may be independent of the domain associated with a memory access request, and so it may have been assumed that any request from a domain which is allowed to select a given PAS would be able to access any PA for which that given PAS is indicated in the protection information as being allowed to provide access to the PA.

Also, this approach can be seen as counterintuitive since one would normally assume that the requests associated with the more secure domain are more trusted than requests associated with the less secure domain and so one would think there would be no problem in allowing memory access requests associated with a more secure domain to access the addresses allocated for access within the less secure PAS.

Instead, in the examples below, when the protection information indicates the predetermined less-secure memory property for the target PA, the memory access requests associated with a more secure domain are not allowed to access the target PA even if the selected PAS is the less secure PAS. This is the case even though memory access requests associated with the more secure domain may, in general, be allowed to have the less secure PAS selected as the selected PAS by the PAS selection circuitry, and could be allowed to access other physical addresses of the less secure PAS for which the predetermined less-secure memory property has not been defined by the protection information.

The inventors recognised that it can be useful to provide support for the predetermined less-secure property being encoded in the protection information, and for the checking circuitry to implement a corresponding check based on the predetermined less-secure property (for at least one mode of operation). This can improve robustness against confused deputy attacks, which is a form of attack exploiting the greater privileges of more secure software. For example, an attacker can trick software executing in the more secure domain into performing memory accesses which compromise resources associated with the less secure domain. By using the predetermined less-secure property, regions of the less secure PAS can be isolated from access by more secure software operating in the more secure domain, as the predetermined less-secure property causes the checking circuitry to enforce that memory access requests associated with more secure domain are unable to access the physical addresses assigned the predetermined less-secure memory property by the protection information, even when they specify the less secure PAS associated with the less secure domain. This helps establish an additional layer of protection that can help in a "defence in depth" approach to defending resources used by less-secure software against confused deputy attacks.

In the at least one mode of operation, the checking circuitry may reject a memory access request associated with the more secure domain for which the selected physical address space is the less secure physical address space, in response to determining that the protection information corresponding to the target physical address indicates the predetermined less-secure memory property. For example, to reject the memory access request, the checking circuitry may cause a fault to be signalled.

In some examples, the less secure domain and more secure domain could be the only domains of processing supported. However, other examples could have more than two domains (and hence more than two physical address spaces).

In general, the less secure domain and more secure domain may be any two domains of processing where the more secure domain is able to cause the less secure PAS to be selected for at least some of its memory access requests but the less secure domain is unable to cause the more secure PAS to be selected for its memory access requests. In some cases, the less secure domain may be the domain associated with the lowest level of security, e.g. with the requests associated with the less secure domain being unable to cause any other domain's PAS to be selected as the less secure PAS.

In some examples, the domains may also include an additional more secure domain associated with an additional more secure PAS. The additional more secure PAS may be prohibited from being selected for memory access requests associated with the less secure domain. The predetermined less-secure memory property may also be used to deny access to physical addresses associated with the less secure PAS when an access is requested by a memory access request associated with the additional more secure domain. Hence, the predetermined less-secure memory property may be used to defend less secure memory against accesses from more than one more secure domain. In the at least one mode of operation, in response to determining that the protection information corresponding to the target physical address indicates the predetermined less-secure memory property, the checking circuitry may determine that: the additional more secure PAS is prohibited from providing access to the target PA, and memory access requests associated with the additional more secure domain are prohibited from accessing the target PA, even when the selected physical address space is the less secure PAS.

The additional more secure PAS may be prohibited from being selected for memory access requests associated with the more secure domain, and the more secure PAS may be prohibited from being selected for memory access requests associated with the additional more secure domain. By providing two more secure domains each with a corresponding more secure PAS which cannot be accessed from the other more secure domain (while memory access requests associated with the less secure domain cannot access any of those more secure PASs), this allows software provided by two mutually untrusted software developers to coexist on the same hardware without having to trust each other, even when both providers require guarantees of isolation from less secure software components. For example, the more secure domain and additional more secure domain may corresponding to the Secure and Realm domains mentioned below (or vice versa).

In some examples, the predetermined less-secure memory property may prevent memory access requests associated with any more secure domain than the less secure domain accessing the corresponding PAs via the less secure PAS, even when the less secure PAS is allowed to be selected by the PAS selection circuitry for memory access requests associated with those more secure domains.

However, in other examples, there may be a most secure domain which is still allowed to access PAs assigned the less-secure memory property using the less secure PAS, in contrast to one or more other domains considered more secure than the less secure domain.

For example, the domains may include a root domain for managing switching between other domains of the plurality of domains. The root domain is associated with a root PAS which is prohibited from being selected for memory access requests associated with a domain other than the root domain. In the at least one mode of operation, the checking circuitry may permit a memory access request associated with the root domain for which the selected physical address space is the less secure physical address space, in response to determining that the protection information corresponding to the target physical address indicates the predetermined less-secure memory property. Confused deputy attacks based on the root domain are much less likely than for the more secure domain, because typically the root domain software is provided by a single trusted provider and is a smaller piece of code (rather than being a complex suite of software including portions provided by many different suppliers), so the root domain software presents a much smaller attack surface than the software executing in the more secure domain. By enabling memory access requests associated with the root domain to access the less secure PAS even for PAs assigned the predetermined less-secure memory property, this can simplify design of the root domain software and ensure the root domain software is able to carry out its management functions in respect of software executing in other domains.

In some examples, the checking circuitry could always operate according to the at least one mode of operation, in which the checks based on the predetermined less-secure memory property are enforced on memory access requests associated with the more secure domain (and if supported the additional more secure domain). However, in other examples, the checking circuitry need not always enforce the checks based on the predetermined less-secure memory property, as there could be another mode where use of the predetermined less-secure memory property is disabled. This can be useful for backwards compatibility with software written for systems which do not support the predetermined less-secure memory property.

Hence, in some examples the checking circuitry may determine whether to operate according to the at least one mode of operation based on configuration information indicative of whether use of the predetermined less-secure memory property is enabled. That configuration information may be programmable by software executing on the apparatus. In some cases, the right to program the configuration information may be limited to software executing in a particular subset of domains (e.g. to software executing in the root domain) or a particular subset of privilege levels (e.g. software with at least a given level of privilege).

In some examples, in a further mode of operation, the checking circuitry may treat an encoding indicating the predetermined less-secure memory property as a reserved encoding not to be used for indicating valid properties for the target physical address. Hence, in this case the use of the predetermined less-secure memory property is disabled.

In one example, in response to determining that the protection information corresponding to the target physical address has the reserved encoding, the checking circuitry may trigger an error handling response. While spare encodings may be reserved for possible future expansion of the options available for selection using the protection information, it can be useful to implement an approach where a fault is triggered if the protection information corresponding to the target physical address, as the setting of the protection information to the reserved encoding (which should not be selected for correctly configured regions of memory) can be a hint that an error has occurred (such as a malicious attempt to corrupt system operation by changing the state of the protection information, or an accidental error such as a flip in a bit from 0 to 1 or vice versa due to a particle strike or other randomly occurring physical event). Hence, signalling a fault if the protection information for the target PA indicates a reserved encoding (including, if currently in the further mode of operation, the reserved encoding which in the at least one mode would be used to indicate the predetermined less-secure memory property) can help to reduce vulnerability to errors. In some examples, the fault may be triggered not only if the protection information corresponding to the target PA itself has the reserved encoding, but also if any one of a group of protection information entries for a block of memory comprising the target PA has a reserved encoding, even if the protection information entry which has the reserved encoding is not the protection information entry corresponding to the target PA itself.

In response to determining that the protection information corresponding to the target PA indicates a second less-secure memory property and does not indicate the predetermined less-secure memory property, the checking circuitry may determine that: the less secure PAS is allowed to provide access to the target PA, the more secure PAS is prohibited from providing access to the target PA, and memory access requests associated with the more secure domain are allowed to access the target PA when the selected PAS is the less secure PAS. Hence, the second less-secure memory property can be used for regions of memory for which it is desired to share data between less-secure software in the less secure domain and more-secure software in the more secure domain, as this can allow the more secure software to access the parts of the less secure PAS that provide the shared data. However, for other less secure data that the less secure software does not want to expose to the more secure domain, the predetermined less-secure memory property can be used.

In some examples, the techniques discussed above can be implemented within a processor such as a central processing unit (CPU), graphics processing unit (GPU) or other processing unit capable of executing program instructions according to an instruction set architecture.

For example, the address translation circuitry may comprise a memory management unit associated with processing circuitry, and the processing circuitry may comprise at least one system register specifying current domain identifying information which identifies a current domain to be specified as said one of the plurality of domains of processing for memory access requests issued by the processing circuitry. When the technique discussed above is implemented within a processor, then the checking circuitry may have access to system register state for identifying the current domain associated with memory access requests, so can use the contents of the at least one system register to identify whether a request is associated with the more secure domain, for determining whether that request is allowed to use the less secure PAS to gain access to a memory region assigned the predetermined less-secure property.

However, the techniques discussed above can also be implemented for other system components which can access memory, but which may not themselves be able to execute instructions according to an instruction set architecture, so may not have direct access to system registers specifying a current domain of processing.

For example, the address translation circuitry may comprise a system memory management unit (SMMU) to translate addresses on behalf of one or more devices in a data processing system. For example, the devices may include peripheral devices or input/output devices, or hardware accelerators. Where a SMMU is performing address translation in a system supporting the distinct PASs described above, then the SMMU may also be associated with corresponding PAS selection circuitry and checking circuitry as described above, to select a PAS to be accessed for a given memory access request issued by one of the devices, and enforce checking, based on the protection information, of whether the selected PAS is allowed to provide access to the target PA. However, for enforcing the check based on the predetermined less-secure memory property, some information is needed on which domain of processing a given memory access request is associated with. The system memory management unit may identify the one of the plurality of domains of processing associated with the memory access request based on a domain identifier provided to the system memory management unit by a device that issued the memory access request.

The device may have configuration information which specifies which domain identifier to specify for given requests (e.g. this may be configured based on previous information provided by software or stored in memory, depending on the particular software use case). For example, when software executing on a processor in a particular domain configures a device to carry out a function on its behalf, that software may set corresponding configuration information in the device to specify the particular domain so that memory access requests associated with that function will then specify the particular domain in the domain identifier provided by the SMMU. Again, the particular mechanism for setting the configuration information for controlling selection of the domain identifier by a device may be a software-specific mechanism depending on the specific tasks being carried out by the device, so need not be a feature of the hardware apparatus. Also, the device itself is not necessarily part of the apparatus comprising the SMMU, as the device may be an external device. However, in general, it is useful for the SMMU to be provided with a domain identifier associated with memory access requests received from a device, so that the checking circuitry associated with the SMMU can check whether the memory access requests meets the conditions associated with the predetermined less-secure memory property.

Regardless of whether the address translation circuitry is a memory management unit within a processing element or a system memory management unit associated with I/O, peripheral or hardware accelerator devices, the PAS selection circuitry may select the selected PAS based on: the one of the plurality of domains of processing associated with the memory access request; and at least for memory access requests associated with a domain other than the less secure domain, address space selection information specified directly or indirectly by an address translation entry providing an address mapping used in translation of the target virtual address to the target physical address. The address space selection information could be specified directly within the encoding of the address translation entry itself, or indirectly in a register referenced by part of the address translation entry. Either way, specifying address space selection information in the address translation entry enables different addresses accessed within the same domain of processing to be assigned different PASs as the selected PAS. This can be useful to support inter-domain sharing of data where appropriate. However, as the address translation entry which provides the address space selection information may be set under control of an operating system or hypervisor which might potentially be compromised, for enforcing the security model it can be useful for the protection information to be defined independent of the address space selection information, to allow for a further check of whether the selected PAS is allowed to provide access to a given physical address.

For at least some components of the memory system, memory access requests whose virtual addresses are translated into physical addresses in different physical address spaces are treated as if they were accessing completely separate addresses in memory, even if the physical addresses in the respective physical address spaces actually correspond to the same location in memory.

For example, the memory system may include a point of physical aliasing (PoPA), which is a point at which aliasing physical addresses from different physical address spaces which correspond to the same memory system resource are mapped (de-aliased) to a single physical address uniquely identifying that memory system resource. The memory system may include at least one pre-PoPA memory system component which is provided upstream of the PoPA, which treats the aliasing physical addresses as if they correspond to different memory system resources.

For example, the at least one pre-PoPA memory system component could include a cache or translation lookaside buffer which may cache data, program code or address translation information for the aliasing physical addresses in separate entries, so that if the same memory system resource is requested to be accessed from different physical address spaces, then the accesses will cause separate cache or TLB entries to be allocated. Also, the pre-PoPA memory system component could include coherency control circuitry, such as a coherent interconnect, snoop filter, or other mechanism for maintaining coherency between cached information at respective master devices. The coherency control circuitry could assign separate coherency states to the respective aliasing physical addresses in different physical address spaces. Hence, the aliasing physical addresses are treated as separate addresses for the purpose of maintaining coherency even if they do actually correspond to the same underlying memory system resource. Although on the face of it, tracking coherency separately for the aliasing physical addresses could appear to cause a problem of loss of coherency, in practice this is not a problem because if processes operating in different domains are really intended to share access to a particular memory system resource then they can use the less secure physical address space (with the second less-secure memory property mentioned earlier) to provide access to that resource. Another example of a pre-PoPA memory system component may be a memory protection engine which is provided for protecting data saved to off-chip memory against loss of confidentiality and/or tampering. Such a memory protection engine could, for example, separately encrypt data associated with a particular memory system resource with different encryption keys depending on which physical address space the resource is accessed from, effectively treating the aliasing physical addresses as if they were corresponding to different memory system resources (e.g. an encryption scheme which makes the encryption dependent on the address may be used, and the physical address space identifier may be considered to be part of the address for this purpose).

Regardless of the form of the pre-PoPA memory system component, it can be useful for such a PoPA memory system component to treat the aliasing physical addresses as if they correspond to different memory system resources, as this provides hardware-enforced isolation between the accesses issued to different physical address spaces so that information associated with one domain cannot be leaked to another domain by features such as cache timing side channels or side channels involving changes of coherency triggered by the coherency control circuitry.

It may be possible, in some implementations, for the aliasing physical addresses in the different physical address spaces to be represented using different numeric physical address values for the respective different physical address spaces. This approach may require a mapping table to determine at the PoPA which of the different physical address values correspond to the same memory system resource. However, this overhead of maintaining the mapping table may be considered unnecessary, and so in some implementations it may be simpler if the aliasing physical addresses comprise physical addresses which are represented using the same numeric physical address value in each of the different physical address spaces. If this approach is taken then, at the point of physical aliasing, it can be sufficient simply to discard the physical address space identifier which identifies which physical address space is accessed using a memory access, and then to provide the remaining physical address bits downstream as a de-aliased physical address.

Hence, in addition to the pre-PoPA memory system component, the memory system may also include a PoPA memory system component configured to de-alias the plurality of aliasing physical addresses to obtain a de-aliased physical address to be provided to at least one downstream memory system component. The PoPA memory system component could be a device accessing a mapping table to find the dealiased address corresponding to the aliasing address in a particular address space, as described above. However, the PoPA component could also simply be a location within the memory system where the physical address tag associated with a given memory access is discarded so that the physical address provided downstream uniquely identifies a corresponding memory system resource regardless of which physical address space this was provided from. Alternatively, in some cases the PoPA memory system component may still provide the physical address space tag to the at least one downstream memory system component (e.g. for the purpose of enabling completer-side filtering as discussed further below), but the PoPA may mark the point within the memory system beyond which downstream memory system components no longer treat the aliasing physical addresses as different memory system resources, but consider each of the aliasing physical addresses to map the same memory system resource. For example, if a memory controller or a hardware memory storage device downstream of the PoPA receives the physical address tag and a physical address for a given memory access request, then if that physical address corresponds to the same physical address as a previously seen transaction, then any hazard checking or performance improvements performed for respective transactions accessing the same physical address (such as merging accesses to the same address) may be applied even if the respective transactions specified different physical address space tags. In contrast, for a memory system component upstream of the PoPA, such hazard checking or performance improving steps taken for transactions accessing the same physical address may not be invoked if these transactions specify the same physical address in different physical address spaces.

The techniques discussed above can be implemented in a hardware apparatus which has hardware circuitry logic for implementing the functions as discussed above. Hence, the address translation circuitry, PAS selection circuitry and checking circuitry may comprise hardware circuit logic.

However, in other examples a computer program for controlling a host data processing apparatus to provide an instruction execution environment for execution of target code may be provided with processing program logic and address translation program logic which performs, in software, equivalent functions to the address translation circuitry, PAS selection circuitry and checking circuitry discussed above. This can be useful, for example, for enabling target code written for a particular instruction set architecture to be executed on a host computer which may not support that instruction set architecture. Functionality expected by the instruction set architecture which is not provided by the host computer could be emulated instead by simulation software providing an equivalent instruction execution environment for the target code as would be expected if the target code had been executed on the hardware device which actually supports the instruction set architecture.

Hence, address translation program logic, PAS selection program logic and checking program logic may be provided to emulate the functionality of the address translation circuitry, PAS selection circuitry and checking circuitry described earlier. For the approach where a simulation of the architecture is provided, the respective physical address spaces are simulated physical address spaces because they do not actually correspond to physical address spaces identified by hardware components of the host computer, but would be mapped to addresses within the virtual address space of the host.

Providing such a simulation can be useful for a range of purposes, for example for enabling legacy code written for one instruction set architecture to be executed on a different platform which supports a different instruction set architecture, or for assisting with software development of new software to be executed for a new version of an instruction set architecture when hardware devices supporting that new version of the instruction set architecture are not available yet (this can enable the software for the new version of the architecture to start to be developed in parallel with development of the hardware devices supporting the new version of the architecture).

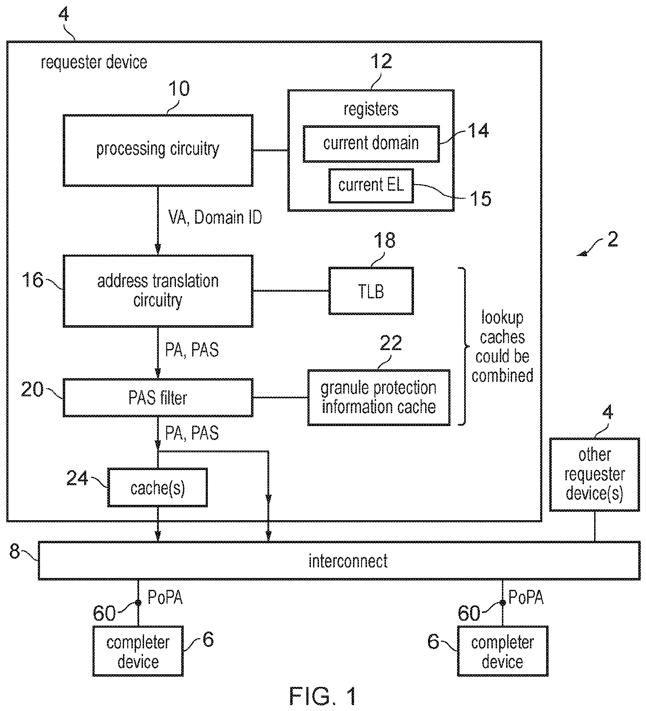

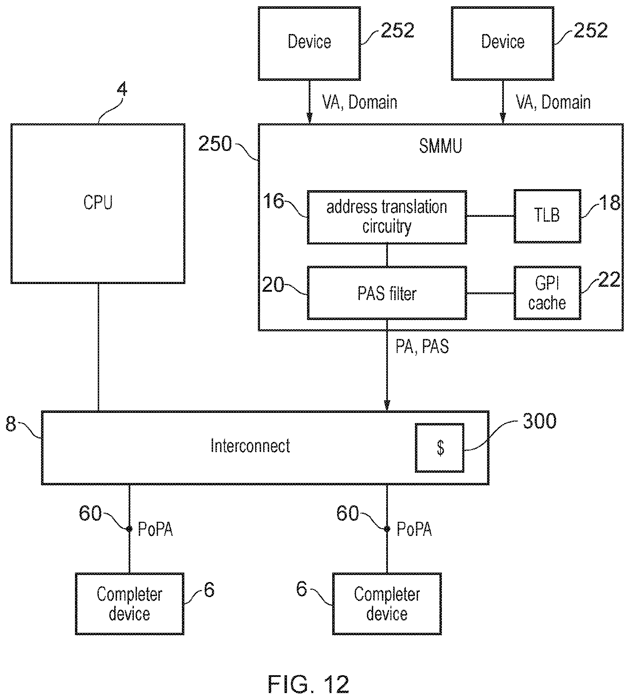

Figure 1 schematically illustrates an example of a data processing system 2 having at least one requester device 4 and at least one completer device 6. An interconnect 8 provides communication between the requester devices 4 and completer devices 6. A requester device is capable of issuing memory access requests requesting a memory access to a particular addressable memory system location. A completer device 6 is a device that has responsibility for servicing memory access requests directed to it. Although not shown in Figure 1, some devices may be capable of acting both as a requester device and as a completer device. The requester devices 4 may for example include processing elements such as a central processing unit (CPU) or graphics processing unit (GPU) or other master devices such as bus master devices, network interface controllers, display controllers, etc. The completer devices may include memory controllers responsible for controlling access to corresponding memory storage units, peripheral controllers for controlling access to a peripheral device, etc. Figure 1 shows an example configuration of one of the requester devices 4 in more detail but it will be appreciated that the other requester devices 4 could have a similar configuration. Alternatively, the other requester devices may have a different configuration to the requester device 4 shown on the left of Figure 1 (e.g. as shown in Figure 12 discussed in more detail below, in some cases another requester device 4 may be a system memory management unit which has address translation circuitry 16 and a PAS filter 20 but does not have the processing circuitry 10 shown in Figure 1).

The requester device 4 shown in Figure 1 has processing circuitry 10 for performing data processing in response to instructions, with reference to data stored in registers 12. The registers 12 may include general purpose registers for storing operands and results of processed instructions, as well as control registers for storing control data for configuring how processing is performed by the processing circuitry. For example the control data may include a current domain indication 14 used to select which domain of operation is the current domain, and a current exception level indication 15 indicating which exception level is the current exception level in which the processing circuitry 10 is operating.

The processing circuitry 10 may be capable of issuing memory access requests specifying a virtual address (VA) identifying the addressable location to be accessed and a domain identifier (Domain ID or 'security state') identifying the current domain. Address translation circuitry 16 (e.g. a memory management unit (MMU)) translates the virtual address into a physical address (PA) through one of more stages of address translation based on page table data defined in page table structures stored in the memory system. A translation lookaside buffer (TLB) 18 acts as a lookup cache for caching some of that page table information for faster access than if the page table information had to be fetched from memory each time an address translation is required. In this example, as well as generating the physical address, the address translation circuitry 16 also selects one of a number of physical address spaces associated with the physical address and outputs a physical address space (PAS) identifier identifying the selected physical address space. Selection of the PAS will be discussed in more detail below.

A PAS filter 20 acts as checking circuitry for checking, based on the translated physical address and the PAS identifier, whether that physical address is allowed to be accessed within the specified physical address space identified by the PAS identifier. This lookup is based on granule protection information stored in a granule protection table structure stored within the memory system. The granule protection information may be cached within a granule protection information cache 22, similar to caching of page table data in the TLB 18. While the granule protection information cache 22 is shown as a separate structure from the TLB 18 in the example of Figure 1, in other examples these types of lookup caches could be combined into a single lookup cache structure so that a single lookup of an entry of the combined structure provides both the page table information and the granule protection information. The granule protection information defines information restricting the physical address spaces from which a given physical address can be accessed, and based on this lookup the PAS filter 20 determines whether to allow the memory access request to proceed to be issued to one or more caches 24 and/or the interconnect 8. If the specified PAS for the memory access request is not allowed to access the specified physical address then the PAS filter 20 blocks the transaction and may signal a fault.

While Figure 1 shows an example with a system having multiple requester devices 4, the features shown for the one requester device on the left hand side of Figure 1 could also be included in a system where there is only one requester device, such as a single-core processor.

While Figure 1 shows an example where selection of the PAS for a given request is performed by the address translation circuitry 16, in other examples information for determining which PAS to select can be output by the address translation circuitry 16 to the PAS filter 20 along with the PA, and the PAS filter 20 may select the PAS and check whether the PA is allowed to be accessed within the selected PAS. Hence, PAS selection circuitry could be provided by either the address translation circuitry 16, or the PAS filter 20, or both working together.

The provision of the PAS filter 20 helps to support a system which can operate in a number of domains of operation each associated with its own isolated physical address space where, for at least part of the memory system (e.g. for some caches or coherency enforcing mechanisms such as a snoop filter), the separate physical address spaces are treated as if they refer to completely separate sets of addresses identifying separate memory system locations, even if addresses within those address spaces actually refer to the same physical location in the memory system. This can be useful for security purposes.

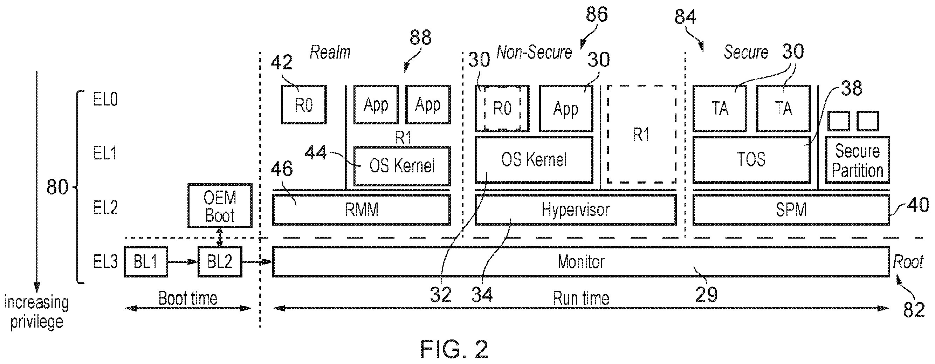

Figure 2 shows an example of different operating states and domains in which the processing circuitry 10 can operate, and an example of types of software which could be executed in the different exception levels and domains (of course, it will be appreciated that the particular software installed on a system is chosen by the parties managing that system and so is not an essential feature of the hardware architecture).

The processing circuitry 10 is operable at a number of different exception levels 80, in this example four exception levels labelled ELO, EL1, EL2 and EL3, where in this example EL3 refers to the exception level with the greatest level of privilege while EL0 refers to the exception level with the least privilege. It will be appreciated that other architectures could choose the opposite numbering so that the exception level with the highest number could be considered to have the lowest privilege. In this example the least privileged exception level EL0 is for application -level code, the next most privileged exception level EL1 is used for operating system-level code, the next most privileged exception level EL2 is used for hypervisor-level code which manages switching between a number of virtualised operating systems, while the most privileged exception level EL3 is used for monitor code which manages switches between respective domains and allocation of physical addresses to physical address spaces, as described later.

When an exception occurs while processing software in a particular exception level, for some types of exceptions, the exception is taken to a higher (more privileged) exception level, with the particular exception level in which the exception is to be taken being selected based on attributes of the particular exception which occurred. However, it may be possible for other types of exceptions to be taken at the same exception level as the exception level associated with the code being processed at the time an exception was taken, in some situations. When an exception is taken, information characterising the state of the processor at the time the exception was taken may be saved, including for example the current exception level at the time the exception was taken, and so once an exception handler has been processed to deal with the exception, processing may then return to the previous processing and the saved information can be used to identify the exception level to which processing should return.

In addition to the different exception levels, the processing circuitry also supports a number of domains of operation (also known as "security states"), the domains including a root domain 82, a secure (S) domain 84, a less secure domain 86 and a realm domain 88. For ease of reference, the less secure domain will be described below as the "non-secure" (NS) domain, but it will be appreciated that this is not intended to imply any particular level of (or lack of) security. Instead, "non-secure" merely indicates that the non-secure domain is intended for code which is less secure than code operating in the secure domain. The root domain 82 is selected when the processing circuitry 10 is in the highest exception level EL3. When the processing circuitry is in one of the other exception levels ELO to EL2, the current domain is selected based on the current domain indicator 14, which indicates which of the other domains 84, 86, 88 is active. For each of the other domains 84, 86, 88 the processing circuitry could be in any of the exception levels ELO, EL1 or EL2.

At boot time, a number of pieces of boot code (e.g. BL1, BL2, OEM Boot) may be executed, e.g. within the more privileged exception levels EL3 or EL2. The boot code BL1, BL2 may be associated with the root domain for example and the OEM boot code may operate in the Secure domain. However, once the system is booted, at runtime the processing circuitry 10 may be considered to operate in one of the domains 82, 84, 86 and 88 at a time. Each of the domains 82 to 88 is associated with its own associated physical address space (PAS) which enables isolation of data from the different domains within at least part of the memory system. This will be described in more detail below.

The non-secure domain 86 can be used for regular application-level processing, and for the operating system and hypervisor activity for managing such applications. Hence, within the non-secure domain 86, there may be application code 30 operating at EL0, operating system (OS) code 32 operating at EL1 and hypervisor code 34 operating at EL2.

The secure domain 84 enables certain system-on-chip security, media or system services to be isolated into a separate physical address space from the physical address space used for non-secure processing. The secure and non-secure domains are not equal, in the sense that the non-secure domain code cannot access resources associated with the secure domain 84, while the secure domain can access both secure and non-secure resources (at least for regions of memory for which the predetermined less-secure memory property described further below is not defined). An example of a system supporting such partitioning of secure and non-secure domains 84, 86 is a system based on the TrustZone^{®} architecture provided by Arm^{®} Limited. The secure domain can run trusted applications 36 at ELO, a trusted operating system 38 at EL1, as well as optionally a secure partition manager 40 at EL2 which may, if secure partitioning is supported, use stage 2 page tables to support isolation between different trusted operating systems 38 executing in the secure domain 84 in a similar way to the way that the hypervisor 34 may manage isolation between virtual machines or guest operating systems 32 executing in the non-secure domain 86.

Extending the system to support a secure domain 84 has become popular in recent years because it enables a single hardware processor to support isolated secure processing, avoiding the need for the processing to be performed on a separate hardware processor. However, with the increasing popularity of use of the secure domain, many practical systems having such a secure domain now support, within the secure domain, a relatively sophisticated mixed environment of services which are provided by a wide range of different software providers. For example the code operating in the secure domain 84 may include different pieces of software provided by (among others): the silicon provider who manufactured the integrated circuit, an original equipment manufacturer (OEM) who assembles the integrated circuit provided by the silicon provider into an electronic device such as a mobile telephone, an operating system vendor (OSV) who provides the operating system 32 for the device; and/or a cloud platform provider who manages a cloud server supporting services for a number of different clients through the cloud.

However, increasingly there is a desire for parties providing user-level code (which might normally be expected to execute as applications 30 within the non-secure domain 86) to be provided with secure computing environments which can be trusted not to leak information to other parties operating code on the same physical platform. It may be desirable for such secure computing environments to be dynamically allocatable at runtime, and to be certified and attestable so that the user is able to verify whether sufficient security guarantee is provided on the physical platform, before trusting the device to process potentially sensitive code or data. A user of such software may not wish to trust the party providing a rich operating system 32 or hypervisor 34 which might normally operate in the non-secure domain 86 (or even if those providers themselves can be trusted, the user may wish to protect themselves against the operating system 32 or hypervisor 34 being compromised by an attacker). Also, while the secure domain 84 could be used for such user-provided applications needing secure processing, in practice this causes problems both for the user providing the code requiring the secure computing environment and for the providers of existing code operating within the secure domain 84. For the providers of existing code operating within the secure domain 84, the addition of arbitrary user-provided code within the secure domain would increase the attack surface for potential attacks against their code, which may be undesirable, and so allowing users to add code into the secure domain 84 may be strongly discouraged. On the other hand, the user providing the code requiring the secure computing environment may not be willing to trust all of the providers of the different pieces of code operating in the secure domain 84 to have access to its data or code, if certification or attestation of the code operating in a particular domain is needed as a prerequisite for the user-provided code to perform its processing, it may be difficult to audit and certify all of the distinct pieces of code operating in the secure domain 84 provided by the different software providers, which may limit the opportunities for third parties to provide more secure services.

Therefore, as shown in Figure 2, an additional more secure domain 88, called the realm domain, is provided which can be used by such user-introduced code to provide a secure computing environment orthogonal to any secure computing environment associated with components operating in the secure domain 24. In the realm domain, the software executed can include a number of realms, where each realm can be isolated from other realms by a realm management module (RMM) 46 operating at exception level EL2. The RMM 46 may control isolation between the respective realms 42, 44 executing the realm domain 88, for example by defining access permissions and address mappings in page table structures similar to the way in which hypervisor 34 manages isolation between different components operating in the non-secure domain 86. In this example, the realms include an application-level realm 42 which executes at EL0 and an encapsulated application/operating system realm 44 which executes across exception levels ELO and EL1. It will be appreciated that it is not essential to support both ELO and ELO/EL1 types of realms, and that multiple realms of the same type could be established by the RMM 46.

The realm domain 88 has its own physical address space allocated to it, similar to the secure domain 84, but the realm domain is orthogonal to the secure domain 84 in the sense that while the realm and secure domains 88, 84 can each access the non-secure PAS associated with the non-secure domain 86, the realm and secure domains 88, 84 cannot access each other's physical address spaces. This means that code executing in the realm domain 88 and secure domains 84 have no dependencies on each other. Code in the realm domain only needs to trust the hardware, the RMM 46 and the code operating in the root domain 82 which manages switching between domains, which means attestation and certification becomes more feasible. Attestation enables a given piece of software to request verification that code installed on the device matches certain anticipated properties. This could be implemented by checking whether a hash of the program code installed on the device matches an expected value that is signed by a trusted party using a cryptographic protocol. The RMM 46 and monitor code 29 could for example be attested by checking whether a hash of this software matches an expected value signed by a trusted party, such as the silicon provider who manufactured the integrated circuit comprising the processing system 2 or an architecture provider who designed the processor architecture which supports the domain-based memory access control. This can allow user-provided code 42, 44 to verify whether the integrity of the domain-based architecture can be trusted prior to executing any secure or sensitive functions.

Hence, it can be seen that the code associated with realms 42, 44, which would previously have executed in the non-secure domain 86 as shown by the dotted lines showing the gap in the non-secure domain where these processes would previously have executed, can now be moved to the realm domain where they may have stronger security guarantees because their data and code is not accessible by other code operating in a non-secure domain 86. However, due to the fact that the realm domain 88 and secure domain 84 are orthogonal and so cannot see each other's physical address spaces, this means that the providers of code in the realm domain do not need to trust the providers of code in the secure domain and vice versa. The code in the realm domain can simply trust the trusted firmware providing the monitor code 29 for the root domain 82 and the RMM 46, which may be provided by the silicon provider or the provider of the instruction set architecture supported by the processor, who may already inherently need to be trusted when the code is executing on their device, so that no further trust relationships with other operating system vendors, OEMs or cloud hosts are needed for the user to be able to be provided with a secure computing environment.

This can be useful for a range of applications and use cases, including for example mobile wallet and payment applications, gaming anti-cheating and piracy mechanisms, operating system platform security enhancements, secure virtual machine hosting, confidential computing, networking, or gateway processing for Internet of Things devices. It will be appreciated that users may find many other applications where the realm support is useful.

To support the security guarantees provided to a realm, the processing system may support an attestation report function, where at boot time or at run time measurements are made of firmware images and configuration, e.g. monitor code images and configuration or RMM code images and configuration and at runtime realm contents and configuration are measured, so that the realm owner can trace the relevant attestation report back to known implementations and certifications to make a trust decision on whether to operate on that system.

As shown in Figure 2, a separate root domain 82 is provided which manages domain switching, and that root domain has its own isolated root physical address space. The creation of the root domain and the isolation of its resources from the secure domain allows for a more robust implementation even for systems which only have the non-secure and secure domains 86, 84 but do not have the realm domain 88, but can also be used for implementations which do support the realm domain 88. The root domain 82 can be implemented using monitor software 29 provided by (or certified by) the silicon provider or the architecture designer, and can be used to provide secure boot functionality, trusted boot measurements, system-on-chip configuration, debug control and management of firmware updates of firmware components provided by other parties such as the OEM. The root domain code can be developed, certified and deployed by the silicon provider or architecture designer without dependencies on the final device. In contrast the secure domain 84 can be managed by the OEM for implementing certain platform and security services. The management of the non-secure domain 86 may be controlled by an operating system 32 to provide operating system services, while the realm domain 88 allows the development of new forms of trusted execution environments which can be dedicated to user or third party applications while being mutually isolated from existing secure software environments in the secure domain 84.

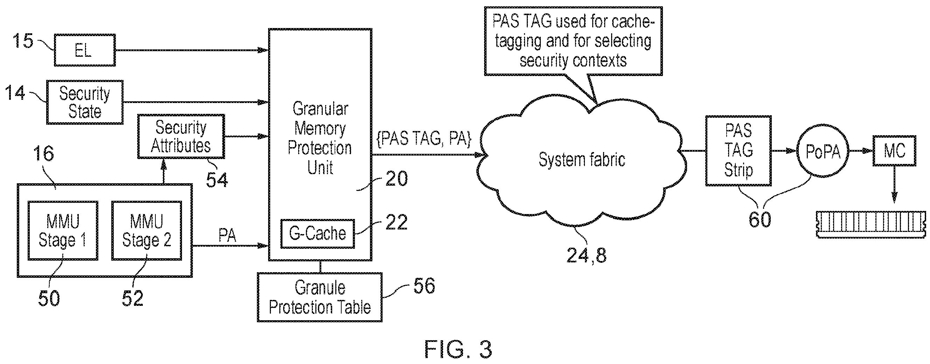

Figure 3 schematically illustrates another example of a processing system 2 for supporting these techniques. Elements which are the same as in Figure 1 are illustrated with the same reference numeral. Figure 3 shows more detail in the address translation circuitry 16, which comprises stage 1 and stage 2 memory management units 50, 52. The stage 1 MMU 50 may be responsible for translating virtual addresses to either physical addresses (when the translation is triggered by EL2 or EL3 code) or to intermediate addresses (when the translation is triggered by EL0 or EL1 code in an operating state where a further stage 2 translation by the stage 2 MMU 52 is required). The stage 2 MMU may translate intermediate addresses into physical addresses. The stage 1 MMU may be based on page tables controlled by an operating system for tran slations initiated from ELO or EL1, page tables controlled by a hypervisor for translations from EL2, or page tables controlled by monitor code 29 for translations from EL3. On the other hand, the stage 2 MMU 52 may be based on page table structures defined by a hypervisor 34, RMM 46 or secure partition manager 14 depending on which domain is being used. Separating the translations into two stages in this way allows operating systems to manage address translation for themselves and applications under the assumption that they are the only operating system running on the system, while the RMM 46, hypervisor 34 or SPM40 may manage isolation between different operating systems running in the same domain.

As shown in Figure 3, the address translation process using the address translation circuitry 16 may return security attributes 54 which, in combination with the current exception level 15 and the current domain 14 (or security state), allow section of a particular physical address space (identified by a PAS identifier or "PAS TAG") to be accessed in response to a given memory access request. The physical address and PAS identifier may be looked up in a granule protection table 56 which provides the granule protection information described earlier. In this example the PAS filter 20 is shown as a granular memory protection unit (GMPU) which verifies whether the selected PAS is allowed to access the requested physical address and if so allows the transaction to be passed to any caches 24 or interconnect 8 which are part of the system fabric of the memory system.

The GMPU 20 allows assigning memory to separate address spaces while providing a strong, hardware-based, isolation guarantee and providing spatial and temporal flexibility in the assignment methods of physical memory into these address spaces, as well as efficient sharing schemes. As described earlier, the execution units in the system are logically partitioned to virtual execution states (domains or "Worlds") where there is one execution state (Root world) located at the highest exception level (EL3), referred to as the "Root World" that manages physical memory assignment to these worlds.

A single System physical address space is virtualized into multiple "Logical" or "Architectural" Physical Address Spaces (PAS) where each such PAS is an orthogonal address space with independent coherency attributes. A System Physical Address is mapped to a single "Logical" Physical Address Space by extending it with a PAS tag.

A given World is allowed access to a subset of Logical Physical Address Spaces. This is enforced by a hardware filter 20 that can be attached to the output of the Memory Management Unit 16.

A World defines the security attributes (the PAS tag) of the access using fields in the Translation Table Descriptor of the page tables used for address translation. The hardware filter 20 has access to a table (Granule Protection Table 56, or GPT) that defines for each page in the system physical address space granule protection information (GPI) indicating the PAS TAG it is associated with and (optionally) other Granule Protection attributes.

The hardware filter 20 checks the World ID and the Security Attributes against the Granule's GPI and decides if access can be granted or not, thus forming a Granular Memory Protection Unit (GMPU).

The GPT 56 can reside in on-chip SRAM or in off-chip DRAM, for example. If stored off-chip, the GPT 56 may be integrity-protected by an on-chip memory protection engine that may use encryption, integrity and freshness mechanisms to maintain security of the GPT 56.

Locating the GMPU 20 on the requester-side of the system (e.g. on the MMU output) rather than on the completer-side allows allocating access permissions in page granularity while permitting the interconnect 8 to continue hashing/striping the page across multiple DRAM ports.

Transactions remain tagged with the PAS TAG as they propagate throughout the system fabric 24, 8 until reaching a location defined as the Point of Physical Aliasing 60. This allows to locate the filter on the Master-side without diminishing the security guarantees comparing to Slave-side filtering. As the transaction propagates throughout the system, the PAS TAG can be used as an in-depth security mechanism for address isolation: e.g. caches can add the PAS TAG to the address tag in the cache, preventing accesses made to the same PA using the wrong PAS TAG from hitting in the cache and therefore improving side-channel resistance. The PAS TAG can also be used as context selector for a Protection Engine attached to the memory controller that encrypts data before it is written to external DRAM.

The Point of Physical Aliasing (PoPA) is a location in the system where the PAS TAG is stripped and the address changes back from a Logical Physical Address to a System Physical Address. The PoPA can be located below the caches, at the completer-side of the system where access to the physical DRAM is made (using encryption context resolved through the PAS TAG). Alternatively, it may be located above the caches to simplify system implementation at the cost of reduced security.

At any point in time, a world can request to transition a page from one PAS to another. The request is made to the monitor code 29 at EL3 which inspects the current state of the GPI. EL3 may only allow a specific set of transitions to occur (e.g. from Non-secure PAS to Secure PAS but not from Realm PAS to Secure PAS - another supported transition may be between Non-Secure PAS with the predetermined less secure memory property and Non-Secure PAS with the second less secure memory property). To provide a clean transition, a new instruction is supported by the System - "Data Clean and Invalidate to the Point of Physical Aliasing" which EL3 can submit before transitioning a page to the new PAS - this guarantees that any residual state associated with the previous PAS is flushed from any caches upstream of (closer to the requester-side than) the PoPA 60.

Another property that can be achieved by attaching the GMPU 20 to the master side is efficient sharing of memory between worlds. It may be desirable to grant a subset of N worlds with shared access to a physical granule while preventing other worlds from accessing it. This can be achieved by adding a "restrictive shared" semantic to the Granule Protection Information, while forcing it to use a specific PAS TAG. As an example, the GPI can indicate that a physical Granule is can accessed only by "Realm World" 88 and "Secure World" 84 while being tagged with the PAS TAG of the Secure PAS 84.

An example of the above property is making fast changes in the visibility properties of a specific physical granule. Consider a case where each world is assigned with a private PAS that is only accessible to that World. For specific granules, the World can request to make them visible to the Non-Secure world at any point in time by changing their GPI from "exclusive" to "restrictive shared with Non-Secure world", and without changing the PAS association. This way, the visibility of that granule can be increased without requiring costly cache-maintenance or data copy operations.

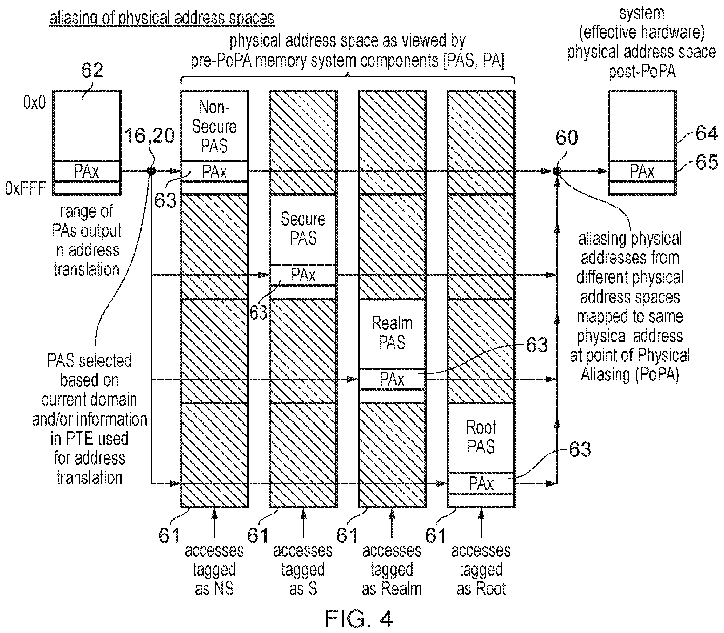

Figure 4 illustrates the concept of aliasing of the respective physical address spaces onto physical memory provided in hardware. As described earlier, each of the domains 82, 84, 86, 88 has its own respective physical address space 61.

At the point when a physical address is generated by address translation circuitry 16, the physical address has a value within a certain numeric range 62 supported by the system, which is the same regardless of which physical address space is selected. However, in addition to the generation of the physical address, the address translation circuitry 16 may also select a particular physical address space (PAS) based on the current domain 14 and/or information in the page table entry used to derive the physical address. Alternatively, instead of the address translation circuitry 16 performing the selection of the PAS, the address translation circuitry (e.g. MMU) could output the physical address and the information derived from the page table entry (PTE) which is used for selection of the PAS, and then this information could be used by the PAS filter or GMPU 20 to select the PAS.

The selection of PAS for a given memory access request may be restricted depending on the current domain in which the processing circuitry 10 is operating when issuing the memory access request, according to rules defined in the following table:

| Current Domain | Non-Secure PAS | Secure PAS | Realm PAS | Root PAS |
|---|---|---|---|---|
| Non-secure | Accessible | Inaccessible | Inaccessible | Inaccessible |
| Secure | Accessible* | Accessible | Inaccessible | Inaccessible |
| Realm | Accessible* | Inaccessible | Accessible | Inaccessible |
| Root | Accessible | Accessible | Accessible | Accessible |

For those domains for which there are multiple physical address spaces available for selection, the information from the accessed page table entry used to provide the physical address is used to select between the available PAS options. For the entries in the table marked * regarding access to the Non-Secure PAS, whether the Secure and Realm domains are able to access the Non-Secure PAS also depends on whether the predetermined less-secure memory property defined earlier has been specified in the granule protection information (GPI) for the PA being accessed (at least in some modes of operation - it is possible to provide a mode where use of this property is disabled for backwards compatibility reasons).

Hence, at the point when the PAS filter 20 outputs a memory access request to the system fabric 24, 8 (assuming it passed any filtering checks), the memory access request is associated with a physical address (PA) and a selected physical address space (PAS).

From the point of view of memory system components (such as caches, interconnects, snoop filters etc.) which operate before the point of physical aliasing (PoPA) 60, the respective physical address spaces 61 are viewed as entirely separate ranges of addresses which correspond to different system locations within memory. This means that, from the point of view of the pre-PoPA memory system components, the range of addresses identified by the memory access request is actually four times the size of the range 62 which could be output in the address translation, as effectively the PAS identifier is treated as additional address bits alongside the physical address itself, so that depending on which PAS is selected the same physical address PAx can be mapped to a number of aliasing physical addresses 63 in the distinct physical address spaces 61. These aliasing physical addresses 63, all actually correspond to the same memory system location implemented in physical hardware, but the pre-PoPA memory system components treat aliasing addresses 63 as separate addresses. Hence, if there are any pre-PoPA caches or snoop filters allocating entries for such addresses, the aliasing addresses 63 would be mapped into different entries with separate cache hit/miss decisions and separate coherency management. This reduces likelihood or effectiveness of attackers using cache or coherency side channels as a mechanism to probe the operation of other domains.

The system may include more than one PoPA 60 (e.g. memory access requests specifying different physical addresses may be routed via different paths through the memory system and may be handled by different PoPAs 60). At each PoPA 60, the aliasing physical addresses are collapsed into a single de-aliased address 65 in the system physical address space 64. The de-aliased address 65 is provided downstream to any post-PoPA components, so that the system physical address space 64 which actually identifies memory system locations is once more of the same size as the range of physical addresses that could be output in the address translation performed on the requester side. For example, at the PoPA 60 the PAS identifier may be stripped out from the addresses, and for the downstream components the addresses may simply be identified using the physical address value, without specifying the PAS. Alternatively, for some cases where some completer-side filtering of memory access request is desired, the PAS identifier could still be provided downstream of the PoPA 60, but may not be interpreted as part of the address so that the same physical addresses appearing in different physical address spaces 60 would be interpreted downstream of the PoPA as referring to the same memory system location, but the supplied PAS identifier can still be used for performing any completer-side security checks.

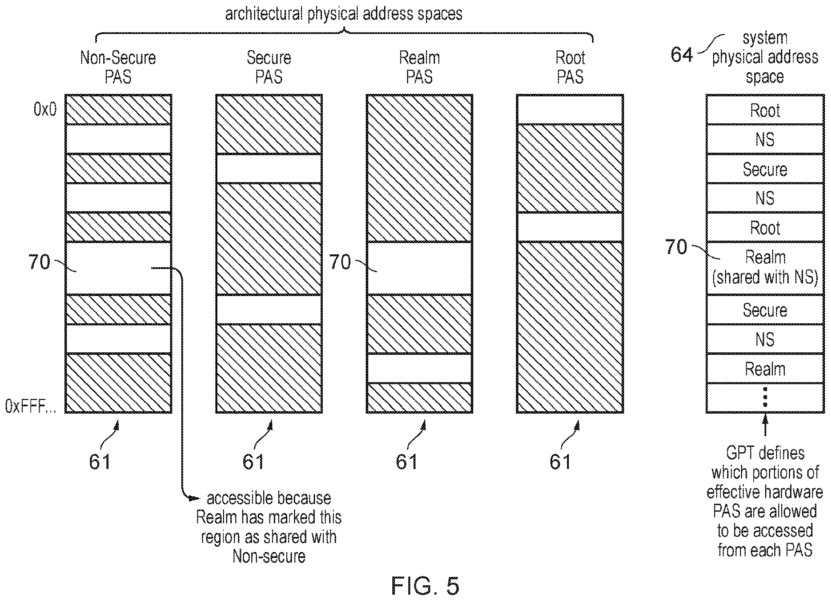

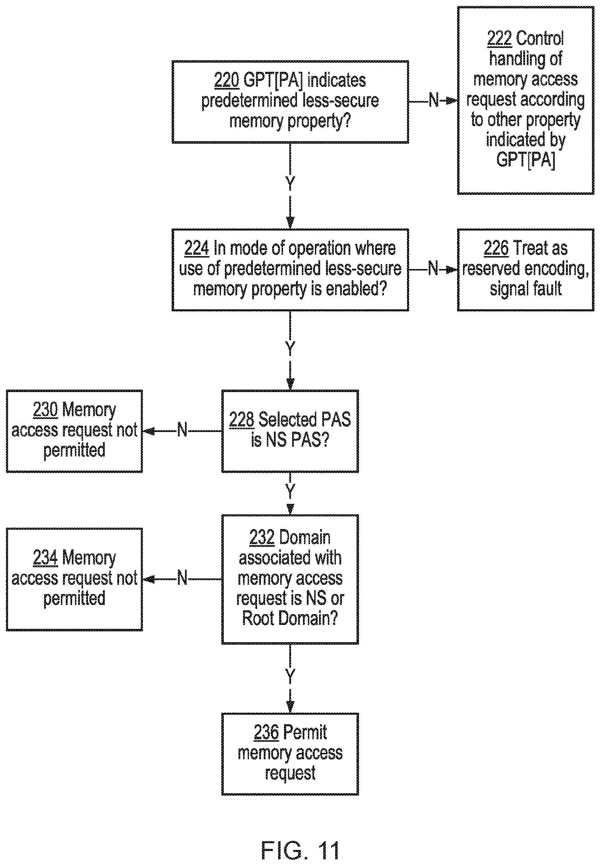

Figure 5 illustrates how the system physical address space 64 can be divided, using the granule protection table 56, into chunks allocated for access within a particular architectural physical address space 61. The granule protection table (GPT) 56 defines which portions of the system physical address space 65 are allowed to be accessed from each architectural physical address space 61. For example the GPT 56 may comprise a number of entries each defining granule protection information (GPI) corresponding to a granule of physical addresses of a certain size (e.g. a 4K page). The GPI may assign a particular PAS for that granule, or may indicate that more than one PAS can be used to access the granule. As explained further with respect to Figure 11, for a setting of the GPI corresponding to the predetermined less-secure memory property, the GPI may also impose a further requirement regarding which domain is associated with the memory access request. If a particular granule or set of granules of physical memory address space is defined in the GPT as being accessible from only one PAS, then it can only be accessed within that PAS and cannot be accessed within the PASs of the other domains. However, note that while a granule allocated to the secure PAS (for instance) cannot be accessed from within the root PAS, the root domain 82 is nevertheless able to access that granule of physical addresses by specifying in its page tables the PAS selection information for ensuring that virtual addresses associated with pages which map to that region of physical addressed memory are translated into a physical address in the secure PAS instead of the root PAS. Hence, the sharing of data across domains (to the extent permitted by the accessibility/inaccessibility rules defined in the table described earlier) may be controlled at the point of selecting the PAS for a given memory access request.

However, in some implementations, in addition to allowing a granule of physical addresses to be accessed within a single assigned PAS defined by the GPT, the GPT could use other GPT attributes to mark certain regions of the address space as shared with another address space (e.g. an address space associated with a domain of lower or orthogonal privilege which would not normally be allowed to select the assigned PAS for that domain's access requests). This can facilitate temporary sharing of data without needing to change the assigned PAS for a given granule. For example, in Figure 5 the region 70 of the realm PAS is defined in the GPT as being assigned to the realm domain, so normally it would be inaccessible from the non-secure domain 86 because the non-secure domain 86 cannot select the realm PAS for its access requests. As the non-secure domain 26 cannot access the realm PAS, then normally non-secure code could not see the data in region 70. However, if the realm temporarily wishes to share some of its data in its assigned regions of memory with the non-secure domain then it could request that the monitor code 29 operating in the root domain 82 updates the GPT 56 to indicate that region 70 is to be shared with the non-secure domain 86, and this may make region 70 also be accessible from the non-secure PAS as shown on the left hand side of Figure 5, without needing to change which domain is the assigned domain for region 70. If the realm domain has designated a region of its address space as shared with the non-secure domain, then although the memory access requests targeting that region which are issued from the non-secure domain may initially specify the non-secure PAS, the PAS filter 20 may remap the PAS identifier of the request to specify the realm PAS instead, so that downstream memory system components treat the request as if it was issued from the realm domain all along. This sharing can improve performance because the operations for assigning a different domain to a particular memory region may be more performance intensive involving a greater degree of cache/TLB invalidation and/or data zeroing in memory or copying of data between memory regions, which may be unjustified if the sharing is only expected to be temporary.

Other implementations may not support such sharing options and so the GPT may restrict each physical address to being accessible through one PAS only.

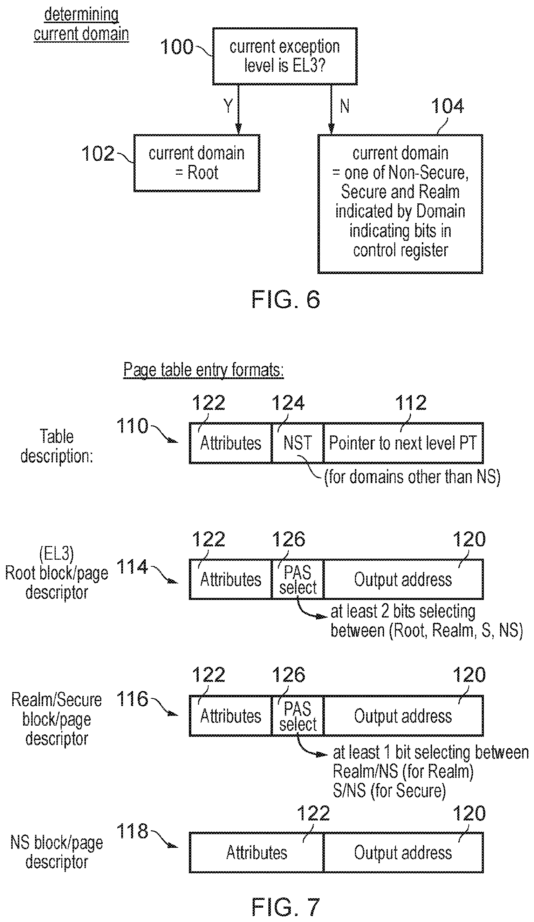

Figure 6 is a flow diagram showing how to determine the current domain of operation, which could be performed by the processing circuitry 10 or by address translation circuitry 16 or the PAS filter 20. At step 100 it is determined whether the current exception level 15 is EL3 and if so then at step 102 the current domain is determined to be the root domain 82. If the current exception level is not EL3, then at step 104 the current domain is determined to be one of the non-secure, secure and realm domains 86, 84, 88 as indicated by at least two domain indicating bits 14 within an EL3 control register of the processor (as the root domain is indicated by the current exception level being EL3, it may not be essential to have an encoding of the domain indicating bits 14 corresponding to the root domain, so at least one encoding of the domain indicating bits could be reserved for other purposes). The EL3 control register is writable when operating at EL3 and cannot be written from other exception levels EL2-EL0.

Figure 7 shows an example of page table entry (PTE) formats which can be used for page table entries in the page table structures used by the address translation circuitry 16 for mapping virtual addresses to physical addresses, mapping virtual addresses to intermediate addresses or mapping intermediate addresses to physical addresses (depending on whether translation is being performed in an operating state where a stage 2 translation is required at all, and if stage 2 translation is required, whether the translation is a stage 1 translation or a stage 2 translation). In general, a given page table structure may be defined as a multi-level table structure which is implemented as a tree of page tables where a first level of the page table is identified based on a base address stored in a translation table base address register of the processor, and an index selecting a particular level 1 page table entry within the page table is derived from a subset of bits of the input address for which the translation lookup is being performed (the input address could be a virtual address for stage 1 translations of an intermediate address for stage 2 translations). The level 1 page table entry may be a "table descriptor" 110 which provides a pointer 112 to a next level page table, from which a further page table entry can then be selected based on a further subset of bits of the input address. Eventually, after one or more lookups to successive levels of page tables, a block or page descriptor PTE 114, 116, 118 may be identified which provides an output address 120 corresponding to the input address. The output address could be an intermediate address (for stage 1 translations performed in an operating state where further stage 2 translation is also performed) or a physical address (for stage 2 translations, or stage 1 translations when stage 2 is not needed).

To support the distinct physical address spaces described above, the page table entry formats may, in addition to the next level page table pointer 112 or output address 120, and any attributes 122 for controlling access to the corresponding block of memory, also specify some additional state for use in physical address space selection.

For a table descriptor 110, the PTEs used by any domain other than the non-secure domain 86 includes a non-secure table indicator 124 which indicates whether the next level page table is to be accessed from the non-secure physical address space or from the current domain's physical address space. This helps to facilitate more efficient management of page tables. Often the page table structures used by the root, realm or secure domains 24 may only need to define special page table entries for a portion of the virtual address space, and for other portions the same page table entries as used by the non-secure domain 26 could be used, so by providing the non-secure table indicator 124 this can allow higher levels of the page table structure to provide dedicated realm/secure table descriptors, while at a certain point of the page table tree, the root realm or secure domains could switch to using page table entries from the non-secure domain for those portions of the address space where higher security is not needed. Other page table descriptors in other parts of the tree of page tables could still be fetched from the relevant physical address space associated with the root, realm or the secure domain.

On the other hand, the block/page descriptors 114, 116, 118 may, depending on which domain they are associated with, include physical address space selection information 126. The non-secure block/page descriptors 118 used in the non-secure domain 86 do not include any PAS selection information because the non-secure domain is only able to access the non-secure PAS. However for the other domains the block/page descriptor 114, 116 includes PAS selection information 126 which is used to select which PAS to translate the input address into. For the root domain 22, EL3 page table entries may have PAS selection information 126 which includes at least 2 bits to indicate the PAS associated with any of the 4 domains 82, 84, 86, 88 as the selected PAS into which the corresponding physical address is to be translated. In contrast, for the realm and secure domains, the corresponding block/page descriptor 116 need only include one bit of PAS selection information 126 which, for the realm domain, selects between the realm and non-secure PASs, and for the secure domain selects between the secure and non-secure PASs. To improve efficiency of circuit implementation and avoid increasing the size of page table entries, for the realm and secure domains the block/page descriptor 116 may encode the PAS selection information 126 at the same positon within the PTE, regardless of whether the current domain is realm or secure, so that the PAS selection bit 126 can be shared.

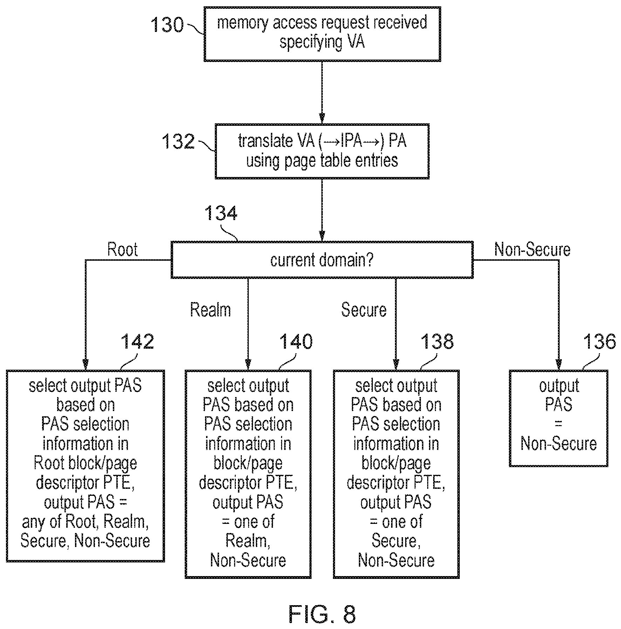

Hence, Figure 8 is a flow diagram showing a method of selecting the PAS based on the current domain and the information 124, 126 from the block/page PTE used in generating the physical address for a given memory access request. The PAS selection could be performed by the address translation circuitry 16, or if the address translation circuitry forwards the PAS selection information 126 to the PAS filter 20, performed by a combination of address translation circuitry 16 and the PAS filter 20.

At step 130 in Figure 8, the processing circuitry 10 issues a memory access request specifying a given virtual address (VA) as a target VA. At step 132 the address translation circuitry 16 looks up any page table entries (or cached information derived from such page table entries) in its TLB 18. If any required page table information is not available, address translation circuitry 16 initiates a page table walk to memory to fetch the required PTEs (potentially requiring a series of memory accesses to step through respective levels of the page table structure and/or multiple stages of address translation for obtaining mappings from a VA to an intermediate address (IPA) and then from an IPA to a PA). Note that any memory access requests issued by the address translation circuitry 16 in the page table walk operations may themselves be subject to address translation and PAS filtering, so the request received at step 130 could be a memory access request issued to request a page table entry from memory. Once the relevant page table information has been identified, the virtual address is translated into a physical address (possibly in two stages via an IPA). At step 134 the address translation circuitry 16 or the PAS filter 20 determines which domain is the current domain, using the approach shown in Figure 6.

If the current domain is the non-secure domain then at step 136 the output PAS selected for this memory access request is the non-secure PAS.

If the current domain is the secure domain, then at step 138 the output PAS is selected based on the PAS selection information 126 which was included in the block/page descriptor PTE which provided the physical address, where the output PAS will be selected as either secure PAS or non-secure PAS.

If the current domain is the realm domain, then at step 140 the output PAS is selected based on the PAS selection information 126 included in the block/page descriptor PTE from which the physical address was derived, and in this case the output PAS is selected as either the realm PAS or the non-secure PAS.

If at step 134 the current domain is determined to be the root domain, then at step 142 the output PAS is selected based on the PAS selection information 126 in the root block/page descriptor PTE 114 from which the physical address was derived. In this case the output PAS is selected as any of the physical address spaces associated with the root, realm, secure and non-secure domains.

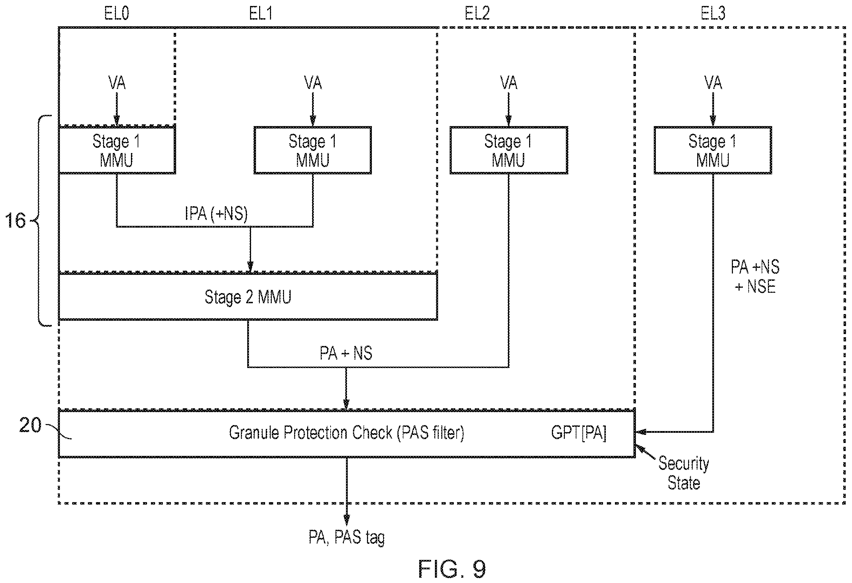

Figure 9 summarises the operation of the address translation circuitry 16 and PAS filter 20. The PAS filtering 20 can be regarded as an additional stage 3 check performed after the stage 1 (and optionally stage 2) address translations performed by the address translation circuitry. Note also that the EL3 translations are based on page table entries which provide two bits of address based selection information (labelled NS,NSE in the example of Figure 12), while a single bit of selection information "NS" is used to select the PAS in the other states. The security state indicated in Figure 9 as input to the granule protection check refers to the Domain ID identifying the current domain of the processing element 4.

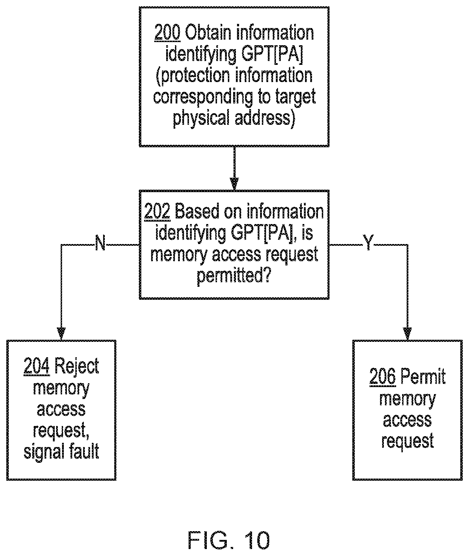

Figure 10 is a flow diagram illustrating a method for the PAS filter 20 (checking circuitry) to perform the protection check at stage 3 shown in Figure 9. At step 200, the PAS filter 20 obtains protection information, GPT[PA], corresponding to the target physical address (PA) obtained for the memory access request by the address translation circuitry 16. For example, the PAS filter 20 looks up the target PA in the granule protection information cache 22, and if there is a hit for the target PA, determines the protection information associated with the target PA based on cached information specified in a hit entry of the granule protection information cache 22. If the target PA misses in the granule protection information cache 22, then at least one memory access request is sent to the memory system to request that the granule protection entry corresponding to the target PA is returned from memory.

For example, the PAS filter 20 may have a register storing a base address of the granule protection table used to define the granule protection information, and may generate the address(es) of the memory access request(s) issued to request the relevant granule protection entry as a function of the base address and the target PA. The right to update the register storing the GPT base address may be restricted to software executing in the root domain (at exception level EL3).

Although some implementations may use a linear table structure which can access the required granule protection entry in a single access, other approaches may use a hierarchical table structure similar to multi-level page tables used by the address translation circuitry 16 for accessing address translation mappings, so that it may be required to issue more than one memory access request to step through multiple levels of granule protection table, with each level of granule protection table being indexed based on a respective portion of the target PA, and a pointer provided in an entry in one level of granule protection table providing a base address which can be used to derive the address at which the next level granule protection table is to be accessed. Once the relevant granule protection entry corresponding to the target PA of the original memory access has been returned from memory, information derived from this granule protection entry may be cached in the granule protection information cache (it is not necessary for the cached information to be encoded in exactly the same way as the granule protection entry stored in memory - e.g. a compression scheme could be used to reduce the volume of cached data compared to the encoding stored in memory).

Hence, at step 200 information allowing the PAS filter 20 to determine the encoding of the granule protection information corresponding to the target PA is identified by the PAS filter 20. This could be identified either based on cached information in cache 22, or based on information stored in memory.

At step 202 the PAS filter 20 determines, based on the information identifying the granule protection information corresponding to the target PA, whether the memory access request is permitted. If the memory access request is not permitted, at step 204 the memory access request is rejected, and a fault is signalled. If the memory access request is determined to be permitted, then at step 206 the memory access request is permitted to proceed.

The granule protection information may be specified at granularity of blocks of memory of a certain size (e.g. 4KB pages, or blocks of a larger or smaller size), so that all physical addresses in the same block share the same granule protection information entry.

In general, the granule protection information entry that corresponds to a given PA provides information identifying which of the physical address spaces is allowed to provide access to that PA. In one example, the granule protection information may support a variety of encodings providing different settings for which PAS is allowed to provide access. In one example, the supported encodings of the granule protection information (GPI) could be as follows:

| **GPI value** | **Meaning** |
|---|---|
| 0b0000 | No accesses permitted to any of the physical address spaces |
| 0b1000 | Accesses permitted to Secure physical address space only |
| 0b1001 | Accesses permitted to Non-secure physical address space only |
| 0b1010 | Accesses permitted to Root physical address space only |
| 0b1011 | Accesses permitted to Realm physical address space only |
| 0b1101 | Accesses permitted to the Non-secure physical address space only, by the Non-Secure or Root security states (no accesses permitted by the Secure or Realm security states). |
| | (or Reserved if in mode where use of this property is disabled) |
| 0b1111 | All accesses permitted |
| Other | Reserved |

It will be appreciated that the specific mapping of GPI values to memory properties shown here is just one example, and the same settings could be implemented with a different mapping of the GPI values (e.g. the meanings of some of the GPI value encodings could be swapped). Also, it will be appreciated that other examples could provide for additional options or could omit one of these options (e.g. the "all accesses permitted" option could be eliminated).

The setting 0b1101 shown above is an example of the predetermined less-secure memory property described above. It will be appreciated that this property could also be represented by other types of encoding (e.g. a bit flag which selects whether the property is satisfied, or range information specifying start/end addresses of ranges of memory for which the predetermined less-secure property). Hence, the claimed approach is not particularly limited as to how this property is encoded. Any information can be used which enables the PAS circuitry to determine that the predetermined less-secure property is defined for a given physical address.

The setting Ob1001 shown above is an example of a second less-secure memory property as described above, which can be used for memory regions for which it is desired to allow requests issued in the Realm or Secure security states to access the memory region via the Non-secure PAS.

Figure 11 is a flow diagram illustrating steps performed by the PAS filter 20 for checking, based on the granule protection information GPT[PA] corresponding to the target PA, whether the memory access is permitted. At step 220, the PAS filter 20 checks whether the granule protection information corresponding to the target PA indicates the predetermined less-secure memory property. If not, then at step 222, the handling of the memory access request is controlled according to any other property indicated by the granule protection information corresponding to the target physical address. For example, if GPT[PA] indicates one of the settings represented by GPI values 0b1000, 0b1001, 0b1010, 0b1101 in the example shown above (noting that similar settings may be encoded differently in other examples), then step 222 may comprise checking whether the selected PAS for the current memory access request is the allowed PAS for which access is permitted in each GPI state (i.e. the allowed PAS would be Secure PAS for 0b1000, Non-secure PAS for 0b1001, Root PAS for 0b1010 and Realm PAS for Ob1011). Also, if GPT[PA] indicates the setting represented using GPI value 0b1111 shown above (again which could be encoded differently in another example), then the memory access request may be determined to be permitted regardless of which PAS is the selected PAS for the memory access request. Also, if GPT[PA] indicates the setting represented using GPI values 0b0000 above, then the memory access request may be determined not to be permitted regardless of which PAS is the selected PAS. If GPT[PA] has another encoding which is a reserved encoding, a fault may be signalled.

If at step 220, the granule protection information GPT[PA] corresponding to the target PA is determined to indicate the predetermined less-secure memory property, then at step 224, the PAS filter 20 determines whether the current mode of operation is a mode where use of the predetermined less-secure memory property is enabled. For example, the PAS filter 20 may determine, based on configuration information specified in a register 12 (e.g. a system register), whether the current mode supports use of the predetermined less-secure memory property. The right to update the configuration information used to determine whether the predetermined less-secure memory property is enabled or disabled may be limited to certain execution states (e.g. software executing at a given exception level or security state - e.g. in some cases only the root domain software executing at EL3 may be allowed to set this configuration information and attempts to update the configuration information made by software at less privileged exception levels may be denied). By supporting a mode where use of the predetermined less-secure memory property is disabled, this can be useful for backwards compatibility with software designed for a system which did not support the predetermined less-secure memory property. If the current mode of operation does not support use of the predetermined less-secure memory property, then at step 226 the indication of the predetermined less-secure memory property is treated as a reserved encoding which should not have been specified by software, and a fault is signalled. In some cases, the fault may also be signalled if another granule protection entry for a PA in a nearby block of memory to the target PA of the memory access (e.g. a granule protection entry accessed in the same cache line as the granule protection entry corresponding to the target PA when a block of granule protection entries is requested from memory by the PAS filter 20 following a miss in the granule protection information cache 22) has the reserved encoding. Signalling a fault in response to detecting a reserved encoding in GPT[PA] or another granule protection entry in the same block can make the system more robust against errors caused by corruption of the GPT.

If the granule protection information GPT[PA] corresponding to the target PA is determined to indicate the predetermined less-secure memory property and the current mode of operation is a mode where use of the predetermined less-secure memory property is enabled, then at step 228 the PAS filter 20 determines whether the selected PAS is the Non-Secure PAS, and if not then at step 230 the memory access request is determined not to be permitted. Hence, if the selected PAS for the memory access request is one of the Realm PAS, Secure PAS and Root PAS, the request is not permitted.

Also, at step 232 the PAS filter 20 determines whether the domain associated with the memory access request is the Non-secure or Root domain. For example, the domain associated with the memory access request may be determined based on register state 14, 15 as described above for Figure 6. If the domain associated with the memory access request is the Secure or Realm domain, then at step 234 the memory access request is not permitted.

If at steps 228 and 232 the PAS filter 20 determines that the memory access request is issued from the Non-Secure domain or Root domain and that the selected PAS is the Non-secure PAS, then at step 236 the memory access request is determined to be permitted.

It will be appreciated that the steps shown in Figure 11 could be reordered or performed at least partially in parallel, to achieve the same functions (e.g. steps 228 and 232 could be performed in the opposite order or in parallel with each other).

Hence, less secure software can request that the Root domain software (or other software responsible for setting the granule protection information) sets the granule protection information for some regions of memory to the setting corresponding to the predetermined less-secure memory property. This means that those memory regions are prevented from being accessed by software executing in the Realm or Secure domains even if the software in those domains has set the PAS selection information 126 in its page tables so that the Non-Secure PAS is selected for memory access requests to those memory regions. This provides greater protection against confused deputy attacks where nominally more privileged/secure software in the Realm or Secure domain is confused by an attacker into making a set of memory accesses that will compromise information maintained by less secure software within memory accessible in the Non-Secure PAS.

On the other hand, the Root domain software is trusted to access memory regions in the Non-secure PAS for which the predetermined less-secure property is defined. As it is anticipated that the Root domain software is a relatively small piece of software (in terms of number of instructions) in comparison to the large number of instructions defined for operating system/hypervisor/application software in the Secure and Realm domains, and that the Root domain software is provided by a single trusted provider (such as a hardware manufacturer, system firmware provider, designer of the instruction set architecture supporting the security model shown in Figure 2, or other trusted party) with an attestable root of trust associated with the software, while the software operating in the Secure and Realm domains may be a complex web of software components provided by many different entities, the Root domain software presents a much smaller attack surface than the software executing in the Secure and Realm domains, and so it can be considered acceptable for Root domain software to be able to access regions of the non-secure PAS that have been assigned the predetermined less-secure memory property (e.g. encoding 0b1101 described above).

The above example of Figure 1 shows the address translation circuitry 16 and PAS filter 20 (checking circuitry), and the PAS selection circuitry represented by one or both of the address translation circuitry 16 and PAS filter 20, within a requester device 4 which may, for example, be a processor such as a CPU, GPU or other processing unit capable of execution of program instructions from an instruction set architecture.

However, as shown in Figure 12, the memory system accessed by such a requester device 4 (e.g. a CPU in the example of Figure 12) may be shared to also be accessible to one or more other devices 252 which may access memory via a system memory management unit (SMMU, also known as an input/output memory management unit or IOMMU) 250. The SMMU 250 may be an example of the other requester device 4 shown in Figure 1.

The devices 252 may, for example, include peripheral devices or I/O devices which provide an interface between the CPU 4 and the outside world (e.g. the devices could include display controllers, network controllers, user interface controllers, memory controllers for accessing external off-ship storage, etc.). Also, the devices 252 may include hardware accelerators which are provided to accelerate bespoke processing tasks using specialised hardware which can carry out this task more efficiently than general purpose processor hardware provided by the CPU 4. For example, hardware accelerators can be provided for accelerating functions such as cryptographic operations and machine learning tasks such as neural network processing. Use of a hardware accelerator can also be helpful to offload certain memory-intensive tasks to take place in the background of ongoing processing at the CPU 4.

As the devices 252 may not have their own address translation circuitry capable of translating virtual addresses to physical addresses based on the rich memory mappings defined by the page tables used by the CPU 4, the SMMU 250 may be provided as a system component to receive requests from the devices 252 specifying a virtual address, and to perform the required address translations on behalf of the devices.

Hence, in a system supporting the security model shown in Figure 2, the SMMU 250 may be provided with address translation circuitry 16 and a PAS filter 20 similar to that shown in Figure 1, with the PAS filter 20 acting as checking circuitry for checking the permissions defined by the granule protection information, and one or both of the address translation circuitry 16 and PAS filter 20 of the SMMU 250 providing the PAS selection circuitry described earlier. Hence, the SMMU 250 can also support access to multiple physical address spaces and a third stage of checks based on the granule protection information as shown in Figure 9. The address translation circuitry 16 and PAS filter 20 may therefore operate in the same way as discussed above. The SMMU 250 may have a TLB 18 and/or GPI cache 22 similar to the corresponding cache structures in the requester 4 shown in Figure 1.

However, for the SMMU 250 to support the predetermined less-secure memory property described above, the PAS filter 20 of the SMMU 250 needs information on which domain (security state) is associated with a memory access request received from a device 252. The SMMU 250 will not have access to the system registers 12 of the CPU which define the register state 14 defining the current domain of operation, and in any case the requests sent by a given device 252 may be related to processing in a domain other than the current domain that is active at the CPU 4. Therefore, in the approach shown in Figure 12, the memory access requests sent to the SMMU 250 by a device 252 may specify a domain identifier which identifies the domain associated with the memory access request. For example, each device 252 may maintain a data structure identifying, for each workload assigned to the device, a corresponding domain identifier (which may be set, for example, at the time of assigning work to the device, based on the current domain 14 associated with the software that caused the work to be assigned to that device). This data structure can be used by the device 252 to select which domain to specify in the domain identifier provided to the SMMU 250 when a memory access request is issued to the SMMU 250. The particular mechanism by which memory access requests from devices are associated with particular domain identifier values may depend on the specific purpose of the device and the mechanism chosen by software developers for assigning workloads to the device 252, so may not be a required feature of the system hardware. However, in general the hardware support for providing signal paths allowing a domain identifier to be provided by the device 252 to the SMMU 250 along with a memory access request means that the PAS filter 20 within the SMMU 250 can implement the protection checking using the predetermined less-secure memory property described above (which depends on the domain associated with the memory access request, not just the selected PAS as for other settings of the granule protection information). Hence, even when SMMU is in use, the predetermined less-secure memory property can be used to prevent device memory access requests associated with processing in the Secure or Realm domains being used to access the Non-secure PAS.

As shown in the example of Figure 12, the interconnect 8 may include a system cache 300 which can be an example of a pre-PoPA memory system component which treats aliasing physical addresses from different PASs as if they correspond to different memory system resources.

Concepts described herein may be embodied in computer-readable code for fabrication of an apparatus that embodies the described concepts. For example, the computer-readable code can be used at one or more stages of a semiconductor design and fabrication process, including an electronic design automation (EDA) stage, to fabricate an integrated circuit comprising the apparatus embodying the concepts. The above computer-readable code may additionally or alternatively enable the definition, modelling, simulation, verification and/or testing of an apparatus embodying the concepts described herein.

For example, the computer-readable code for fabrication of an apparatus embodying the concepts described herein can be embodied in code defining a hardware description language (HDL) representation of the concepts. For example, the code may define a register-transfer-level (RTL) abstraction of one or more logic circuits for defining an apparatus embodying the concepts. The code may define a HDL representation of the one or more logic circuits embodying the apparatus in Verilog, SystemVerilog, Chisel, or VHDL (Very High-Speed Integrated Circuit Hardware Description Language) as well as intermediate representations such as FIRRTL. Computer-readable code may provide definitions embodying the concept using system-level modelling languages such as SystemC and SystemVerilog or other behavioural representations of the concepts that can be interpreted by a computer to enable simulation, functional and/or formal verification, and testing of the concepts.

Additionally or alternatively, the computer-readable code may define a low-level description of integrated circuit components that embody concepts described herein, such as one or more netlists or integrated circuit layout definitions, including representations such as GDSII. The one or more netlists or other computer-readable representation of integrated circuit components may be generated by applying one or more logic synthesis processes to an RTL representation to generate definitions for use in fabrication of an apparatus embodying the invention. Alternatively or additionally, the one or more logic synthesis processes can generate from the computer-readable code a bitstream to be loaded into a field programmable gate array (FPGA) to configure the FPGA to embody the described concepts. The FPGA may be deployed for the purposes of verification and test of the concepts prior to fabrication in an integrated circuit or the FPGA may be deployed in a product directly.

The computer-readable code may comprise a mix of code representations for fabrication of an apparatus, for example including a mix of one or more of an RTL representation, a netlist representation, or another computer-readable definition to be used in a semiconductor design and fabrication process to fabricate an apparatus embodying the invention. Alternatively or additionally, the concept may be defined in a combination of a computer-readable definition to be used in a semiconductor design and fabrication process to fabricate an apparatus and computer-readable code defining instructions which are to be executed by the defined apparatus once fabricated.

Such computer-readable code can be disposed in any known transitory computer-readable medium (such as wired or wireless transmission of code over a network) or non-transitory computer-readable medium such as semiconductor, magnetic disk, or optical disc. An integrated circuit fabricated using the computer-readable code may comprise components such as one or more of a central processing unit, graphics processing unit, neural processing unit, digital signal processor or other components that individually or collectively embody the concept.

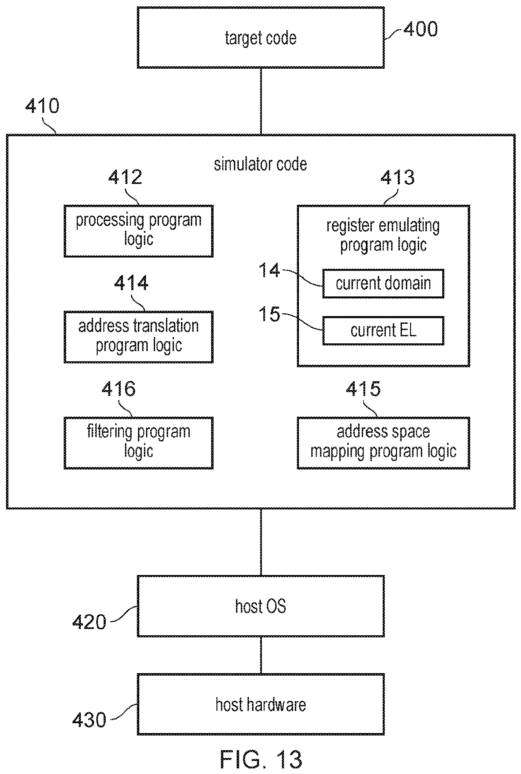

Figure 13 illustrates a simulator implementation that may be used. Whilst the earlier described embodiments implement the present invention in terms of apparatus and methods for operating specific processing hardware supporting the techniques concerned, it is also possible to provide an instruction execution environment in accordance with the embodiments described herein which is implemented through the use of a computer program. Such computer programs are often referred to as simulators, insofar as they provide a software based implementation of a hardware architecture. Varieties of simulator computer programs include emulators, virtual machines, models, and binary translators, including dynamic binary translators. Typically, a simulator implementation may run on a host processor 430, optionally running a host operating system 420, supporting the simulator program 410. In some arrangements, there may be multiple layers of simulation between the hardware and the provided instruction execution environment, and/or multiple distinct instruction execution environments provided on the same host processor. Historically, powerful processors have been required to provide simulator implementations which execute at a reasonable speed, but such an approach may be justified in certain circumstances, such as when there is a desire to run code native to another processor for compatibility or re-use reasons. For example, the simulator implementation may provide an instruction execution environment with additional functionality which is not supported by the host processor hardware, or provide an instruction execution environment typically associated with a different hardware architecture. An overview of simulation is given in "Some Efficient Architecture Simulation Techniques", Robert Bedichek, Winter 1990 USENIX Conference, Pages 53 - 63.

To the extent that embodiments have previously been described with reference to particular hardware constructs or features, in a simulated embodiment, equivalent functionality may be provided by suitable software constructs or features. For example, particular circuitry may be implemented in a simulated embodiment as computer program logic. Similarly, memory hardware, such as a register or cache, may be implemented in a simulated embodiment as a software data structure. In arrangements where one or more of the hardware elements referenced in the previously described embodiments are present on the host hardware (for example, host processor 430), some simulated embodiments may make use of the host hardware, where suitable.

The simulator program 410 may be stored on a computer-readable storage medium (which may be a non-transitory medium), and provides a program interface (instruction execution environment) to the target code 400 (which may include applications, operating systems and a hypervisor) which is the same as the interface of the hardware architecture being modelled by the simulator program 410. Thus, the program instructions of the target code 400 may be executed from within the instruction execution environment using the simulator program 410, so that a host computer 430 which does not actually have the hardware features of the apparatus 2 discussed above can emulate these features. This can be useful, for example, for allowing testing of target code 400 being developed for a new version of a processor architecture before hardware devices actually supporting that architecture are yet available, as the target code can be tested by running within the simulator executing on a host device which does not support that architecture.

The simulator code includes processing program logic 412 which emulates the behaviour of the processing circuitry 10, e.g. including instruction decoding program logic which decodes instructions of the target code 400 and maps the instructions to corresponding sequences of instructions in the native instruction set supported by the host hardware 430 to execute functions equivalent to the decoded instructions. The processing program logic 412 also simulates processing of code in different exception levels and domains as described above. Register emulating program logic 413 maintains a data structure in a host address space of the host processor, which emulates architectural register state defined according to the target instruction set architecture associated with the target code 400. Hence, instead of such architectural state being stored in hardware registers 12 as in the example of Figure 1, it is instead stored in the memory of the host processor 430, with the register emulating program logic 413 mapping register references of instructions of the target code 400 to corresponding addresses for obtaining the simulated architectural state data from the host memory. This architectural state may include the current domain indication 14 and current exception level indication 15 described earlier.

The simulation code includes address translation program logic 414 and filtering program logic 416 which emulate the functionality of the address translation circuitry 16 and PAS filter 20 respectively, with reference to the same page table structures and GPT 56 as described earlier. One or both of the address translation program logic 414 and filtering program logic 416 also acts as PAS selection program logic for selecting the selected PAS associated with a given memory access request, based on the current domain of the processing program logic 412 and PAS selection information defined using the page tables. Hence, the address translation program logic 414 translates virtual addresses specified by the target code 400 into simulated physical addresses in one of the PASs (which from the point of view of the target code refer to physical locations in memory, but actually these simulated physical addresses are mapped onto the (virtual) address space of the host processor by address space mapping program logic 415). The filtering program logic 416 performs a lookup of granule protection information to determine whether to allow memory accesses triggered by the target code to proceed, in the same way as the PAS filter 20 described above.

In the present application, the words "configured to..." are used to mean that an element of an apparatus has a configuration able to carry out the defined operation. In this context, a "configuration" means an arrangement or manner of interconnection of hardware or software. For example, the apparatus may have dedicated hardware which provides the defined operation, or a processor or other processing device may be programmed to perform the function. "Configured to" does not imply that the apparatus element needs to be changed in any way in order to provide the defined operation.

In the present application, lists of features preceded with the phrase "at least one of" mean that any one or more of those features can be provided either individually or in combination. For example, "at least one of: [A], [B] and [C]" encompasses any of the following options: A alone (without B or C), B alone (without A or C), C alone (without A or B), A and B in combination (without C), A and C in combination (without B), B and C in combination (without A), or A, B and C in combination.

Although illustrative embodiments of the invention have been described in detail herein with reference to the accompanying drawings, it is to be understood that the invention is not limited to those precise embodiments, and that various changes and modifications can be effected therein by one skilled in the art without departing from the scope of the invention as defined by the appended claims.

## Claims

1. An apparatus comprising:
address translation circuitry (16) to translate a target virtual address of a memory access request to a target physical address, the memory access request being associated with one of a plurality of domains of processing, the plurality of domains including at least a less secure domain associated with a less secure physical address space and a more secure domain associated with a more secure physical address space;
physical address space selection circuitry (16, 20) to select a selected physical address space for the memory access request from among a plurality of physical address spaces including at least the less secure physical address space and the more secure physical address space, the more secure physical address space being prohibited from being selected for memory access requests associated with the less secure domain; and
checking circuitry (20) to determine whether to reject the memory access request based on protection information corresponding to the target physical address, the protection information specifying which of the plurality of physical address spaces is allowed to provide access to the target physical address; in which:
in at least one mode of operation, in response to determining that the protection information corresponding to the target physical address indicates a predetermined less-secure memory property, the checking circuitry is configured to determine that:
the less secure physical address space is allowed to provide access to the target physical address,
the more secure physical address space is prohibited from providing access to the target physical address, and
memory access requests associated with the more secure domain are prohibited from accessing the target physical address, even when the selected physical address space is the less secure physical address space.

2. The apparatus according to claim 1, in which:
in said at least one mode of operation, the checking circuitry is configured to reject a memory access request associated with the more secure domain for which the selected physical address space is the less secure physical address space, in response to determining that the protection information corresponding to the target physical address indicates the predetermined less-secure memory property.

3. The apparatus according to any of claims 1 and 2, in which the plurality of domains also include an additional more secure domain associated with an additional more secure physical address space, the additional more secure physical address space being prohibited from being selected for memory access requests associated with the less secure domain; and
in said at least one mode of operation, in response to determining that the protection information corresponding to the target physical address indicates the predetermined less-secure memory property, the checking circuitry is configured to determine that:
the additional more secure physical address space is prohibited from providing access to the target physical address, and
memory access requests associated with the additional more secure domain are prohibited from accessing the target physical address, even when the selected physical address space is the less secure physical address space.

4. The apparatus according to claim 3, in which the additional more secure physical address space is prohibited from being selected for memory access requests associated with the more secure domain and the more secure physical address space is prohibited from being selected for memory access requests associated with the additional more secure domain.

5. The apparatus according to any preceding claim, in which the plurality of domains include a root domain for managing switching between other domains of the plurality of domains;
the root domain is associated with a root physical address space which is prohibited from being selected for memory access requests associated with a domain other than the root domain; and
in said at least one mode of operation, the checking circuitry is configured to permit a memory access request associated with the root domain for which the selected physical address space is the less secure physical address space, in response to determining that the protection information corresponding to the target physical address indicates the predetermined less-secure memory property.

6. The apparatus according to any preceding claim, in which the checking circuitry is configured to determine whether to operate according to the at least one mode of operation based on configuration information indicative of whether use of the predetermined less-secure memory property is enabled.

7. The apparatus according to any preceding claim, in which in a further mode of operation, the checking circuitry is configured to treat an encoding indicating the predetermined less-secure memory property as a reserved encoding not to be used for indicating valid properties for the target physical address.

8. The apparatus according to claim 7, in which in response to determining that the protection information corresponding to the target physical address has the reserved encoding, the checking circuitry is configured to trigger an error handling response.

9. The apparatus according to any preceding claim, in which in response to determining that the protection information corresponding to the target physical address indicates a second less-secure memory property and does not indicate the predetermined less-secure memory property, the checking circuitry is configured to determine that:
the less secure physical address space is allowed to provide access to the target physical address,
the more secure physical address space is prohibited from providing access to the target physical address, and
memory access requests associated with the more secure domain are allowed to access the target physical address when the selected physical address space is the less secure physical address space.

10. The apparatus according to any preceding claim, in which the address translation circuitry comprises a memory management unit (50, 52) associated with processing circuitry (10), the processing circuitry comprising at least one system register specifying current domain identifying information, the current domain identifying information identifying a current domain to be specified as said one of the plurality of domains of processing for memory access requests issued by the processing circuitry.

11. The apparatus according to any of claims 1 to 9, in which the address translation circuitry comprises a system memory management unit (250) to translate addresses on behalf of one or more devices in a data processing system; and
the system memory management unit is configured to identify said one of the plurality of domains of processing associated with the memory access request based on a domain identifier provided to the system memory management unit by a device that issued the memory access request.

12. The apparatus according to any preceding claim, in which the physical address space selection circuitry is configured to select the selected physical address space based on:
said one of the plurality of domains of processing associated with the memory access request; and
at least for memory access requests associated with a domain other than the less secure domain, address space selection information specified directly or indirectly by an address translation entry providing an address mapping used in translation of the target virtual address to the target physical address.

13. The apparatus according to any preceding claim, comprising a point of physical aliasing (PoPA) memory system component configured to de-alias a plurality of aliasing physical addresses from different physical address spaces which correspond to a same memory system location, to map any of the plurality of aliasing physical addresses to a de-aliased physical address to be provided to at least one downstream memory system component; and
at least one pre-PoPA memory system component provided upstream of the PoPA memory system component, where the at least one pre-PoPA memory system component is configured to treat the aliasing physical addresses from different physical address spaces as if the aliasing physical addresses correspond to different memory system locations.

14. A method comprising:
translating a target virtual address of a memory access request to a target physical address, the memory access request being associated with one of a plurality of domains of processing, the plurality of domains including at least a less secure domain associated with a less secure physical address space and a more secure domain associated with a more secure physical address space;
selecting a selected physical address space for the memory access request from among a plurality of physical address spaces including at least the less secure physical address space and the more secure physical address space, the more secure physical address space being prohibited from being selected for memory access requests associated with the less secure domain; and
determining whether to reject the memory access request based on protection information corresponding to the target physical address, the protection information specifying which of the plurality of physical address spaces is allowed to provide access to the target physical address; in which:
in at least one mode of operation, in response to determining that the protection information corresponding to the target physical address indicates a predetermined less-secure memory property, a determination is made that:
the less secure physical address space is allowed to provide access to the target physical address,
the more secure physical address space is prohibited from providing access to the target physical address, and
memory access requests associated with the more secure domain are prohibited from accessing the target physical address, even when the selected physical address space is the less secure physical address space.

15. A computer program comprising instructions which, when executed by a host data processing apparatus, control the host data processing apparatus to provide an instruction execution environment for executing target program code, the computer program comprising:
address translation program logic (414) to translate a target virtual address of a memory access request to a target simulated physical address, the memory access request being associated with one of a plurality of domains of processing, the plurality of domains including at least a less secure domain associated with a less secure simulated physical address space and a more secure domain associated with a more secure simulated physical address space;
physical address space selection program logic (414, 416) to select a selected simulated physical address space for the memory access request from among a plurality of simulated physical address spaces including at least the less secure simulated physical address space and the more secure simulated physical address space, the more secure simulated physical address space being prohibited from being selected for memory access requests associated with the less secure domain; and
checking program logic (416) to determine whether to reject the memory access request based on protection information corresponding to the target simulated physical address, the protection information specifying which of the plurality of simulated physical address spaces is allowed to provide access to the target simulated physical address; in which:
in at least one mode of operation, in response to determining that the protection information corresponding to the target simulated physical address indicates a predetermined less-secure memory property, the checking program logic is configured to determine that:
the less secure simulated physical address space is allowed to provide access to the target simulated physical address,
the more secure simulated physical address space is prohibited from providing access to the target simulated physical address, and
memory access requests associated with the more secure domain are prohibited from accessing the target simulated physical address, even when the selected simulated physical address space is the less secure simulated physical address space.

## Patentansprüche

1. Vorrichtung, die Folgendes umfasst:
eine Adressübersetzungsschaltungsanordnung (16) zum Übersetzen einer virtuellen Zieladresse einer Speicherzugriffsanforderung in eine physische Zieladresse, wobei die Speicherzugriffsanforderung einer von mehreren Domänen von Verarbeitung zugeordnet ist, wobei die mehreren Domänen mindestens eine weniger sichere Domäne, die einem weniger sicheren physischen Adressraum zugeordnet ist, und eine sicherere Domäne, die einem sichereren physischen Adressraum zugeordnet ist, beinhalten;
eine Auswahlschaltungsanordnung für physische Adressräume (16, 20) zum Auswählen eines ausgewählten physischen Adressraums für die Speicherzugriffsanforderung aus mehreren physischen Adressräumen, die mindestens den weniger sicheren physischen Adressraum und den sicheren physischen Adressraum beinhalten, wobei es verboten ist, den sichereren physischen Adressraum für Speicherzugriffsanforderungen auszuwählen, die der weniger sicheren Domäne zugeordnet sind; und
eine Prüfschaltungsanordnung (20) zum Bestimmen basierend auf Schutzinformationen, die der physischen Zieladresse entsprechen, ob die Speicherzugriffsanforderung abgelehnt werden soll, wobei die Schutzinformationen spezifizieren, welchem der mehreren physischen Adressräume es erlaubt ist, Zugriff auf die physische Zieladresse bereitzustellen; wobei:
in mindestens einem Betriebsmodus die Prüfschaltungsanordnung als Reaktion auf das Bestimmen, dass die Schutzinformationen, die der physischen Zieladresse entsprechen, eine vorbestimmte weniger sichere Speichereigenschaft angeben, dazu ausgelegt ist, zu bestimmen, dass:
es dem weniger sicheren physischen Adressraum erlaubt ist, Zugriff auf die physische Zieladresse bereitzustellen,
es dem sichereren physischen Adressraum verboten ist, Zugriff auf die physische Zieladresse bereitzustellen, und
es Speicherzugriffsanforderungen, die der sichereren Domäne zugeordnet sind, verboten ist, auf die physische Zieladresse zuzugreifen, selbst wenn der ausgewählte physische Adressraum der weniger sichere physische Adressraum ist.

2. Vorrichtung nach Anspruch 1, wobei:
in dem mindestens einen Betriebsmodus die Prüfschaltungsanordnung als Reaktion auf das Bestimmen, dass die Schutzinformationen, die der physischen Zieladresse entsprechen, die vorbestimmte weniger sichere Speichereigenschaft angeben, dazu ausgelegt ist, eine Speicherzugriffsanforderung, die der sichereren Domäne zugeordnet ist und für die der ausgewählte physische Adressraum der weniger sichere physische Adressraum ist, abzulehnen.

3. Einrichtung nach einem der Ansprüche 1 und 2, wobei die mehreren Domänen zudem eine zusätzliche sicherere Domäne beinhalten, die einem zusätzlichen sichereren physischen Adressraum zugeordnet ist, wobei es verboten ist, den zusätzlichen sichereren physischen Adressraum für Speicherzugriffsanforderungen auszuwählen, die der weniger sicheren Domäne zugeordnet sind; und
in dem mindestens einen Betriebsmodus die Prüfschaltungsanordnung als Reaktion auf das Bestimmen, dass die Schutzinformationen, die der physischen Zieladresse entsprechen, die vorbestimmte weniger sichere Speichereigenschaft angeben, dazu ausgelegt ist, zu bestimmen, dass:
es dem zusätzlichen sichereren physischen Adressraum verboten ist, Zugriff auf die physische Zieladresse bereitzustellen, und
es Speicherzugriffsanforderungen, die der zusätzlichen sichereren Domäne zugeordnet sind, verboten ist, auf die physische Zieladresse zuzugreifen, selbst wenn der ausgewählte physische Adressraum der weniger sichere physische Adressraum ist.

4. Einrichtung nach Anspruch 3, wobei es verboten ist, dass der zusätzliche sicherere physische Adressraum für Speicherzugriffsanforderungen ausgewählt wird, die der sichereren Domäne zugeordnet sind, und es verboten ist, dass der sicherere physische Adressraum für Speicherzugriffsanforderungen ausgewählt wird, die der zusätzlichen sichereren Domäne zugeordnet sind.

5. Einrichtung nach einem der vorhergehenden Ansprüche, wobei die mehreren Domänen eine Root-Domäne zum Verwalten des Umschaltens zwischen anderen Domänen der mehreren Domänen beinhalten;
die Root-Domäne einem physischen Root-Adressraum zugeordnet ist, für den es verboten ist, ihn für Speicherzugriffsanforderungen auszuwählen, die einer anderen Domäne als der Root-Domäne zugeordnet sind; und
in dem mindestens einen Betriebsmodus die Prüfschaltungsanordnung als Reaktion auf das Bestimmen, dass die Schutzinformationen, die der physischen Zieladresse entsprechen, die vorbestimmte weniger sichere Speichereigenschaft angeben, dazu ausgelegt ist, eine Speicherzugriffsanforderung, die der Root-Domäne zugeordnet ist und für die der ausgewählte physische Adressraum der weniger sichere physische Adressraum ist, zu erlauben.

6. Einrichtung nach einem der vorhergehenden Ansprüche, wobei die Prüfschaltungsanordnung dazu ausgelegt ist, basierend auf Konfigurationsinformationen, die angeben, ob die Verwendung der vorbestimmten weniger sicheren Speichereigenschaft aktiviert ist, zu bestimmen, ob gemäß dem mindestens einen Betriebsmodus gearbeitet werden soll.

7. Einrichtung nach einem der vorhergehenden Ansprüche, wobei die Prüfschaltungsanordnung in einem weiteren Betriebsmodus dazu ausgelegt ist, eine Codierung, die die vorbestimmte weniger sichere Speichereigenschaft angibt, als eine reservierte Codierung zu behandeln, die nicht zum Angeben gültiger Eigenschaften für die physische Zieladresse zu verwenden ist.

8. Einrichtung nach Anspruch 7, wobei als Reaktion auf das Bestimmen, dass die Schutzinformationen, die der physischen Zieladresse entsprechen, die reservierte Codierung aufweisen, die Prüfschaltungsanordnung dazu ausgelegt ist, eine Fehlerbehandlungsantwort auszulösen.

9. Einrichtung nach einem der vorhergehenden Ansprüche, wobei als Reaktion auf das Bestimmen, dass die Schutzinformationen, die der physischen Zieladresse entsprechen, eine zweite weniger sichere Speichereigenschaft angeben und die vorbestimmte weniger sichere Speichereigenschaft nicht angeben, die Prüfschaltungsanordnung dazu ausgelegt ist, zu bestimmen, dass:
es dem weniger sicheren physischen Adressraum erlaubt ist, Zugriff auf die physische Zieladresse bereitzustellen,
es dem sichereren physischen Adressraum verboten ist, Zugriff auf die physische Zieladresse bereitzustellen, und
es Speicherzugriffsanforderungen, die der sichereren Domäne zugeordnet sind, erlaubt ist, auf die physische Zieladresse zugreifen, wenn der ausgewählte physische Adressraum der weniger sichere physische Adressraum ist.

10. Einrichtung nach einem der vorhergehenden Ansprüche, wobei die Adressübersetzungsschaltungsanordnung eine Speicherverwaltungseinheit (50, 52) umfasst, die einer Verarbeitungsschaltungsanordnung (10) zugeordnet ist, wobei die Verarbeitungsschaltungsanordnung mindestens ein Systemregister umfasst, das aktuelle Domänenidentifikationsinformationen spezifiziert, wobei die aktuellen Domänenidentifikationsinformationen eine aktuelle Domäne identifizieren, die als die eine der mehreren Domänen von Verarbeitung für Speicherzugriffsanforderungen spezifiziert werden soll, die durch die Verarbeitungsschaltungsanordnung ausgegeben werden.

11. Einrichtung nach einem der Ansprüche 1 bis 9, wobei die Adressübersetzungsschaltungsanordnung eine Systemspeicherverwaltungseinheit (250) zum Übersetzen von Adressen im Namen einer oder mehrerer Vorrichtungen in einem Datenverarbeitungssystem umfasst; und
die Systemspeicherverwaltungseinheit dazu ausgelegt ist, die eine der mehreren Domänen von Verarbeitung, die der Speicherzugriffsanforderung zugeordnet sind, basierend auf einer Domänenkennung zu identifizieren, die der Systemspeicherverwaltungseinheit durch eine Vorrichtung bereitgestellt wird, die die Speicherzugriffsanforderung ausgegeben hat.

12. Einrichtung nach einem der vorhergehenden Ansprüche, wobei die Auswahlschaltungsanordnung für physische Adressräume dazu ausgelegt ist, den ausgewählten physischen Adressraum basierend auf Folgendem auszuwählen:
der einen der mehreren Domänen von Verarbeitung, die der Speicherzugriffsanforderung zugeordnet ist; und
zumindest für Speicherzugriffsanforderungen, die einer anderen Domäne als der weniger sicheren Domäne zugeordnet sind, Adressraumauswahlinformationen, die direkt oder indirekt durch einen Adressübersetzungseintrag spezifiziert sind, der eine Adressabbildung bereitstellt, die bei der Übersetzung der virtuellen Zieladresse in die physische Zieladresse verwendet wird.

13. Einrichtung nach einem der vorhergehenden Ansprüche, die eine Speichersystemkomponente am Punkt von physischem Aliasing (PoPA-Speichersystemkomponente) umfasst, die dazu ausgelegt ist, mehrere physische Aliasing-Adressen aus verschiedenen physischen Adressräumen, die einem gleichen Speichersystemort entsprechen, einem De-Aliasing zu unterziehen, um beliebige der mehreren physischen Aliasing-Adressen auf eine physische Adresse nach De-Aliasing abzubilden, die an mindestens eine nachgeschaltete Speichersystemkomponente zu liefern ist; und
mindestens eine Vor-PoPA-Speichersystemkomponente, die der PoPA-Speichersystemkomponente vorgeschaltet bereitgestellt ist, wobei die mindestens eine Vor-PoPA-Speichersystemkomponente dazu ausgelegt ist, die physischen Aliasing-Adressen aus unterschiedlichen physischen Adressräumen so zu behandeln, als ob die physischen Aliasing-Adressen unterschiedlichen Speichersystemorten entsprechen.

14. Verfahren, das Folgendes umfasst:
Übersetzen einer virtuellen Zieladresse einer Speicherzugriffsanforderung in eine physische Zieladresse, wobei die Speicherzugriffsanforderung einer von mehreren Domänen von Verarbeitung zugeordnet ist, wobei die mehreren Domänen mindestens eine weniger sichere Domäne, die einem weniger sicheren physischen Adressraum zugeordnet ist, und eine sicherere Domäne, die einem sicheren physischen Adressraum zugeordnet ist, beinhalten;
Auswählen eines ausgewählten physischen Adressraums für die Speicherzugriffsanforderung aus mehreren physischen Adressräumen, die mindestens den weniger sicheren physischen Adressraum und den sicherer physischen Adressraum beinhalten, wobei es verboten ist, den sichereren physischen Adressraum für Speicherzugriffsanforderungen auszuwählen, die der weniger sicheren Domäne zugeordnet sind; und
Bestimmen basierend auf Schutzinformationen, die der physischen Zieladresse entsprechen, ob die Speicherzugriffsanforderung abgelehnt werden soll, wobei die Schutzinformationen spezifizieren, welchem der mehreren physischen Adressräume es erlaubt ist, Zugriff auf die physische Zieladresse bereitzustellen; wobei:
in mindestens einem Betriebsmodus als Reaktion auf das Bestimmen, dass die Schutzinformationen, die der physischen Zieladresse entsprechen, eine vorbestimmte weniger sichere Speichereigenschaft angeben, eine Bestimmung vorgenommen wird, dass:
es dem weniger sicheren physischen Adressraum erlaubt ist, Zugriff auf die physische Zieladresse bereitzustellen,
es dem sichereren physischen Adressraum verboten ist, Zugriff auf die physische Zieladresse bereitzustellen, und
es Speicherzugriffsanforderungen, die der sichereren Domäne zugeordnet sind, verboten ist, auf die physische Zieladresse zuzugreifen, selbst wenn der ausgewählte physische Adressraum der weniger sichere physische Adressraum ist.

15. Computerprogramm, das Anweisungen umfasst, die, wenn sie von einer Host-Datenverarbeitungsvorrichtung ausgeführt werden, die Host-Datenverarbeitungsvorrichtung so steuern, dass sie eine Anweisungsausführungsumgebung zum Ausführen von Zielprogrammcode bereitstellt, wobei das Computerprogramm Folgendes umfasst:
Adressübersetzungsprogrammlogik (414) zum Übersetzen einer virtuellen Zieladresse einer Speicherzugriffsanforderung in eine simulierte physische Zieladresse, wobei die Speicherzugriffsanforderung einer von mehreren Domänen von Verarbeitung zugeordnet ist, wobei die mehreren Domänen mindestens eine weniger sichere Domäne, die einem weniger sicheren simulierten physischen Adressraum zugeordnet ist, und eine sicherere Domäne, die mit einem sicheren simulierten physischen Adressraum zugeordnet ist, beinhalten;
Auswahlprogrammlogik für physische Adressräume (414, 416) zum Auswählen eines ausgewählten simulierten physischen Adressraums für die Speicherzugriffsanforderung aus mehreren simulierten physischen Adressräumen, die mindestens den weniger sicheren simulierten physischen Adressraum und den sicheren simulierten physischen Adressraum beinhalten, wobei es verboten ist, den sichereren simulierten physischen Adressraum für Speicherzugriffsanforderungen auszuwählen, die der weniger sicheren Domäne zugeordnet sind; und
Prüfprogrammlogik (416) zum Bestimmen basierend auf Schutzinformationen, die der simulierten physischen Zieladresse entsprechen, ob die Speicherzugriffsanforderung abgelehnt werden soll, wobei die Schutzinformationen spezifizieren, welchem der mehreren simulierten physischen Adressräume es erlaubt ist, Zugriff auf die simulierte physische Zieladresse bereitzustellen; wobei:
in mindestens einem Betriebsmodus die Prüfprogrammlogik als Reaktion auf das Bestimmen, dass die Schutzinformationen, die der simulierten physischen Zieladresse entsprechen, eine vorbestimmte weniger sichere Speichereigenschaft angeben, dazu ausgelegt, zu bestimmen, dass:
es dem weniger sicheren simulierten physischen Adressraum erlaubt ist, Zugriff auf die simulierte physische Zieladresse bereitzustellen,
es dem sichereren simulierten physischen Adressraum verboten ist, Zugriff auf die simulierte physische Zieladresse bereitzustellen, und
es Speicherzugriffsanforderungen, die der sichereren Domäne zugeordnet sind, verboten ist, auf die simulierte physische Zieladresse zuzugreifen, selbst wenn der ausgewählte simulierte physische Adressraum der weniger sichere simulierte physische Adressraum ist.

## Revendications

1. Appareil comprenant :
un circuit de traduction d'adresse (16) permettant de traduire une adresse virtuelle cible d'une demande d'accès à la mémoire en une adresse physique cible, la demande d'accès à la mémoire étant associée à un domaine parmi une pluralité de domaines de traitement, la pluralité de domaines incluant au moins un domaine moins sécurisé associé à un espace d'adressage physique moins sécurisé et un domaine plus sécurisé associé à un espace d'adressage physique plus sécurisé ;
un circuit de sélection d'espace d'adressage physique (16, 20) permettant de sélectionner un espace d'adressage physique sélectionné pour la demande d'accès à la mémoire parmi une pluralité d'espaces d'adressage physique incluant au moins l'espace d'adressage physique moins sécurisé et l'espace d'adressage physique plus sécurisé, la sélection de l'espace d'adressage physique plus sécurisé pour les demandes d'accès à la mémoire associées au domaine moins sécurisé étant interdite ; et
un circuit de contrôle (20) pour déterminer s'il faut ou non rejeter la demande d'accès à la mémoire sur la base d'informations de protection correspondant à l'adresse physique cible, les informations de protection spécifiant lequel de la pluralité d'espaces d'adressage physique est autorisé à fournir un accès à l'adresse physique cible ;
où :
dans au moins un mode de fonctionnement, en réponse à la détermination du fait que les informations de protection correspondant à l'adresse physique cible indiquent une propriété de mémoire moins sécurisée prédéterminée, le circuit de contrôle est configuré pour déterminer que :
l'espace d'adressage physique moins sécurisé est autorisé à fournir l'accès à l'adresse physique cible,
l'espace d'adressage physique plus sécurisé n'est pas autorisé à fournir l'accès à l'adresse physique cible, et
les demandes d'accès à la mémoire associées au domaine plus sécurisé ne sont pas autorisées à accéder à l'adresse physique cible, même lorsque l'espace d'adressage physique sélectionné est l'espace d'adressage physique moins sécurisé.

2. Appareil selon la revendication 1, dans lequel :
dans ledit au moins un mode de fonctionnement, le circuit de contrôle est configuré pour rejeter une demande d'accès à la mémoire associée au domaine plus sécurisé pour lequel l'espace d'adressage physique sélectionné est l'espace d'adressage physique moins sécurisé, en réponse à la détermination du fait que les informations de protection correspondant à l'adresse physique cible indiquent la propriété de mémoire moins sécurisée prédéterminée.

3. Appareil selon l'une quelconque des revendications 1 et 2, dans lequel la pluralité de domaines inclut également un domaine plus sécurisé supplémentaire associé à un espace d'adressage physique plus sécurisé supplémentaire, la sélection de l'espace d'adressage physique plus sécurisé supplémentaire pour des demandes d'accès à la mémoire associées au domaine moins sécurisé étant interdite ; et
dans ledit au moins un mode de fonctionnement, en réponse à la détermination du fait que les informations de protection correspondant à l'adresse physique cible indiquent la propriété de mémoire moins sécurisée prédéterminée, les circuits de contrôle sont configurés pour déterminer que :
l'espace d'adressage physique plus sécurisé supplémentaire n'est pas autorisé à fournir un accès à l'adresse physique cible, et
les demandes d'accès à la mémoire associées au domaine plus sécurisé supplémentaire ne sont pas autorisées accéder à l'adresse physique cible, même lorsque l'espace d'adressage physique sélectionné est l'espace d'adressage physique moins sécurisé.

4. Appareil selon la revendication 3, dans lequel la sélection de l'espace d'adressage physique plus sécurisé supplémentaire pour des demandes d'accès à la mémoire associées au domaine plus sécurisé étant interdite et la sélection de l'espace d'adressage physique plus sécurisé pour des demandes d'accès à la mémoire associées au domaine plus sécurisé supplémentaire étant interdite.

5. Appareil selon l'une quelconque des revendications précédentes, dans lequel la pluralité de domaines inclut un domaine racine pour gérer la commutation entre d'autres domaines de la pluralité de domaines ;
le domaine racine est associé à un espace d'adressage physique racine dont la sélection pour des demandes d'accès à la mémoire associées à un domaine autre que le domaine racine est interdite ; et
dans ledit au moins un mode de fonctionnement, le circuit de contrôle est configuré pour permettre une demande d'accès à la mémoire associée au domaine racine pour lequel l'espace d'adressage physique sélectionné est l'espace d'adressage physique moins sécurisé, en réponse à la détermination du fait que les informations de protection correspondant à l'adresse physique cible indiquent la propriété de mémoire moins sécurisée prédéterminée.

6. Appareil selon l'une quelconque des revendications précédentes, dans lequel le circuit de contrôle est configuré pour déterminer s'il doit ou non fonctionner conformément à l'au moins un mode de fonctionnement sur la base d'informations de configuration indiquant si l'utilisation de la propriété de mémoire moins sécurisée prédéterminée est ou non activée.

7. Appareil selon l'une quelconque des revendications précédentes, dans lequel, dans un autre mode de fonctionnement, le circuit de contrôle est configuré pour traiter un codage indiquant la propriété de mémoire moins sécurisée prédéterminée comme un codage réservé ne devant pas être utilisé pour indiquer des propriétés valides pour l'adresse physique cible.

8. Appareil selon la revendication 7, dans lequel, en réponse à la détermination du fait que les informations de protection correspondant à l'adresse physique cible ont le codage réservé, le circuit de contrôle est configuré pour déclencher une réponse de gestion d'erreur.

9. Appareil selon l'une quelconque des revendications précédentes, dans lequel, en réponse à la détermination du fait que les informations de protection correspondant à l'adresse physique cible indiquent une seconde propriété de mémoire moins sécurisée et n'indiquent pas la propriété de mémoire moins sécurisée prédéterminée, le circuit de contrôle est configuré pour déterminer que :
l'espace d'adressage physique moins sécurisé est autorisé à fournir l'accès à l'adresse physique cible,
l'espace d'adressage physique plus sécurisé n'est pas autorisé à fournir l'accès à l'adresse physique cible, et
les demandes d'accès à la mémoire associées au domaine plus sécurisé sont autorisées à accéder à l'adresse physique cible lorsque l'espace d'adressage physique sélectionné est l'espace d'adressage physique moins sécurisé.

10. Appareil selon l'une quelconque des revendications précédentes, dans lequel le circuit de traduction d'adresse comprend une unité de gestion de mémoire (50, 52) associée à un circuit de traitement (10), le circuit de traitement comprenant au moins un registre de système spécifiant des informations d'identification de domaine courant, les informations d'identification de domaine courant identifiant un domaine courant à spécifier comme ledit un de la pluralité de domaines de traitement pour des demandes d'accès à la mémoire émises par le circuit de traitement.

11. Appareil selon l'une quelconque des revendications 1 à 9, dans lequel le circuit de traduction d'adresse comprend une unité de gestion de mémoire de système (250) pour traduire des adresses au nom d'un ou plusieurs dispositifs dans un système de traitement de données ; et
l'unité de gestion de mémoire système est configurée pour identifier ledit un de la pluralité de domaines de traitement associés à la demande d'accès à la mémoire sur la base d'un identificateur de domaine fourni à l'unité de gestion de mémoire système par un dispositif qui a émis la demande d'accès à la mémoire.

12. Appareil selon l'une quelconque des revendications précédentes, dans lequel le circuit de sélection d'espace d'adressage physique est configuré pour sélectionner l'espace d'adressage physique sélectionné en fonction :
dudit un de la pluralité de domaines de traitement associés à la demande d'accès à la mémoire ; et
au moins pour des demandes d'accès à la mémoire associées à un domaine autre que le domaine moins sécurisé, des informations de sélection d'espace d'adressage spécifiées directement ou indirectement par une entrée de traduction d'adresse fournissant un mappage d'adresse utilisé pour traduire l'adresse virtuelle cible en adresse physique cible.

13. Appareil selon l'une quelconque des revendications précédentes, comprenant un composant de système de mémoire de type point d'aliasing physique (PoPA) configuré pour résoudre l'alias d'une pluralité d'adresses physiques d'aliasing de différents espaces d'adressage physique qui correspondent à un même emplacement de système de mémoire, pour mapper l'une quelconque de la pluralité d'adresses physiques d'aliasing sur une adresse physique de résolution d'alias devant être fournie à au moins un composant de système de mémoire en aval ; et
au moins un composant de système de mémoire pré-PoPA disposé en amont du composant de système de mémoire PoPA, l'au moins un composant de système de mémoire pré-PoPA étant configuré pour traiter les adresses physiques d'aliasing de différents espaces d'adressage physique comme si les adresses physiques d'aliasing correspondaient à différents emplacements de système de mémoire.

14. Procédé comprenant :
la traduction d'une adresse virtuelle cible d'une demande d'accès à la mémoire en une adresse physique cible, la demande d'accès à la mémoire étant associée à l'un d'une pluralité de domaines de traitement, la pluralité de domaines incluant au moins un domaine moins sécurisé associé à un espace d'adressage physique moins sécurisé et un domaine plus sécurisé associé à un espace d'adressage physique plus sécurisé ;
la sélection d'un espace d'adressage physique sélectionné pour la demande d'accès à la mémoire parmi une pluralité d'espaces d'adressage physique incluant au moins l'espace d'adressage physique moins sécurisé et l'espace d'adressage physique plus sécurisé, la sélection de l'espace d'adressage physique plus sécurisé pour les demandes d'accès à la mémoire associées au domaine moins sécurisé étant interdite ; et
la détermination du fait qu'il faut ou non rejeter la demande d'accès à la mémoire sur la base d'informations de protection correspondant à l'adresse physique cible,
les informations de protection spécifiant lequel de la pluralité d'espaces d'adressage physique est autorisé à fournir un accès à l'adresse physique cible ; où :
dans au moins un mode de fonctionnement, en réponse à la détermination du fait que les informations de protection correspondant à l'adresse physique cible indiquent une propriété de mémoire moins sécurisée prédéterminée, il est déterminé que :
l'espace d'adressage physique moins sécurisé est autorisé à fournir l'accès à l'adresse physique cible,
l'espace d'adressage physique plus sécurisé n'est pas autorisé à fournir l'accès à l'adresse physique cible, et
les demandes d'accès à la mémoire associées au domaine plus sécurisé ne sont pas autorisées à accéder à l'adresse physique cible, même lorsque l'espace d'adressage physique sélectionné est l'espace d'adressage physique moins sécurisé.

15. Programme informatique comprenant des instructions qui, lorsqu'elles sont exécutées par un appareil hôte de traitement de données, commandent l'appareil hôte de traitement de données pour fournir un environnement d'exécution d'instructions pour l'exécution d'un code de programme cible, le programme informatique comprenant :
une logique de programme de traduction d'adresse (414) pour traduire une adresse virtuelle cible d'une demande d'accès à la mémoire en une adresse physique simulée cible, la demande d'accès à la mémoire étant associée à l'un d'une pluralité de domaines de traitement, la pluralité de domaines incluant au moins un domaine moins sécurisé associé à un espace d'adressage physique simulé moins sécurisé et un domaine plus sécurisé associé à un espace d'adressage physique simulé plus sécurisé ;
une logique de programme de sélection d'espace d'adressage physique (414, 416) pour sélectionner un espace d'adressage physique simulé sélectionné pour la demande d'accès à la mémoire parmi une pluralité d'espaces d'adressage physique simulés incluant au moins l'espace d'adressage physique simulé moins sécurisé et l'espace d'adressage physique simulé plus sécurisé, la sélection de l'espace d'adressage physique simulé plus sécurisé pour des demandes d'accès à la mémoire associées au domaine moins sécurisé étant interdite ; et
une logique de programme de contrôle (416) pour déterminer s'il faut ou non rejeter la demande d'accès à la mémoire sur la base d'informations de protection correspondant à l'adresse physique cible, les informations de protection spécifiant lequel de la pluralité d'espaces d'adressage physique simulé est autorisé à fournir un accès à l'adresse physique simulé cible ; où :
dans au moins un mode de fonctionnement, en réponse à la détermination du fait que les informations de protection correspondant à l'adresse physique simulé cible indiquent une propriété de mémoire moins sécurisée prédéterminée, la logique de programme de contrôle est configurée pour déterminer que :
l'espace d'adressage physique simulé moins sécurisé est autorisé à fournir l'accès à l'adresse physique simulée cible,
l'espace d'adressage physique simulé plus sécurisé n'est pas autorisé à fournir l'accès à l'adresse physique simulée cible, et
les demandes d'accès à la mémoire associées au domaine plus sécurisé ne sont pas autorisées à accéder à l'adresse physique simulée cible, même lorsque l'espace d'adressage physique simulé sélectionné est l'espace d'adressage physique simulé moins sécurisé.
